# FASCICULE DE BREVET EUROPEEN

(11) **EP 3 798 532 B1**
(45) Date de publication et mention de la délivrance du brevet: **08.06.2022**
(21) Numéro de dépôt: 20191774.7
(22) Date de dépôt: 19.08.2020
(51) Int. Cl.: F25B 1/00, F25B 5/02, F25B 6/02, F25B 29/00, F25B 41/00, F25B 49/02, F24D 3/18, F24D 12/02, F24D 19/10, F24F 5/00, F25B 41/20, F25B 41/40

(54) **MACHINE THERMODYNAMIQUE ET PROCÉDÉS ALTERNATIFS POUR OPÉRER UNE TELLE MACHINE**
THERMODYNAMISCHE MASCHINE UND ALTERNATIVE BETRIEBSVERFAHREN DAFÜR
THERMODYNAMIC MACHINE AND ALTERNATIVE METHODS FOR ITS OPERATION

(30) Priorité: 24.09.2019 FR 1910508
(43) Date de publication de la demande: 31.03.2021
(73) Titulaire: X-Terma, 38240 Meylan (FR)
(72) Inventeur: SEGUIN, Bruno, 38240 MEYLAN (FR)
(74) Mandataire: Talbot, Alexandre

(56) Documents cités:
- EP-A1- 2 918 949
- FR-A1- 2 886 388
- US-A- 3 529 432
- US-A1- 2003 196 445

## Description

### Domaine technique

L'invention concerne une machine thermodynamique et des procédés alternatifs pour opérer une telle machine. Ainsi, l'objet de l'invention appartient au domaine des installations de production d'énergie calorifique et frigorifique par cycle thermodynamique, par exemple pour satisfaire les besoins de chauffage, de rafraîchissement, et de production d'eau chaude sanitaire, dans les secteurs du bâtiment et de l'industrie.

Plus particulièrement, l'invention a pour domaine les machines thermodynamiques multisources, aptes à échanger de l'énergie thermique avec au moins deux sources externes différentes, par exemple l'air ambiant et le sous-sol. L'invention concerne une machine thermodynamique appelée thermofrigopompe, qui assure simultanément la fourniture d'énergie calorifique à un consommateur d'énergie calorifique d'une part et la fourniture d'énergie frigorifique à un consommateur d'énergie frigorifique d'autre part, tout en échangeant de l'énergie thermique avec l'une ou l'autre de ces deux sources externes, ou avec les deux.

### Technique antérieure

Le consommateur d'énergie calorifique, appelé également consommateur de chaleur, est défini comme un ou plusieurs éléments absorbant de la chaleur par l'intermédiaire d'un fluide caloporteur. La puissance calorifique transférée au consommateur est directement proportionnelle à la différence entre la température du fluide caloporteur en direction du consommateur de chaleur et la température du fluide caloporteur au retour du consommateur de chaleur.

Le consommateur d'énergie frigorifique, appelé également consommateur de froid, est défini comme un ou plusieurs éléments absorbant de l'énergie frigorifique par l'intermédiaire d'un fluide caloporteur. La puissance frigorifique transférée au consommateur est directement proportionnelle à la différence entre la température du fluide caloporteur en direction du consommateur de froid et la température du fluide caloporteur au retour du consommateur de froid.

Les thermofrigopompes produisent une énergie calorifique qui est transférée à l'extérieur à travers un échangeur thermique appelé échangeur condenseur, au circuit primaire duquel a lieu la condensation d'un fluide frigorigène, et au circuit secondaire duquel circule le fluide caloporteur véhiculant l'énergie calorifique vers le consommateur de chaud. Les thermofrigopompes produisent simultanément une énergie frigorifique qui est transférée à l'extérieur à travers un échangeur thermique appelé échangeur évaporateur, au circuit primaire duquel a lieu l'évaporation d'un fluide frigorigène, et au circuit secondaire duquel circule le fluide caloporteur véhiculant l'énergie frigorifique vers le consommateur de froid.

Par le principe même de fonctionnement de la machine, basé sur le cycle thermodynamique d'un fluide frigorigène, le rapport entre les puissances calorifique et frigorifique produites par la machine à un instant donné, dépend essentiellement du type de fluide frigorigène utilisé et des valeurs de température de condensation et d'évaporation du fluide frigorigène à l'instant considéré. Ces valeurs de température sont directement liées aux valeurs de température du fluide caloporteur en sortie du secondaire de l'échangeur condenseur et en sortie du secondaire de l'échangeur évaporateur. Le rapport entre les puissances calorifique et frigorifique produites par la machine à un instant donné ne peut donc pas être ajusté librement.

D'un autre côté, le rapport entre la puissance calorifique requise par le consommateur de chaleur et la puissance frigorifique requise par le consommateur de froid, indépendant de la machine thermodynamique, peut varier à chaque instant, et peut en outre prendre n'importe quelle valeur. Une thermofrigopompe est incapable d'adapter à chaque instant à la fois la puissance calorifique et la puissance frigorifique produites aux valeurs de puissance calorifique et frigorifique requises respectivement par le consommateur de chaleur et le consommateur de froid. Soit la machine adapte la puissance calorifique produite à la puissance calorifique requise par le consommateur de chaleur, et dans ce cas la puissance frigorifique produite par la machine ne correspond pas au niveau de puissance requis par le consommateur de froid. Soit la machine adapte la puissance frigorifique produite à la puissance frigorifique requise par le consommateur de froid, et dans ce cas la puissance calorifique produite par la machine ne correspond pas au niveau de puissance requis par le consommateur de chaud.

On distingue deux modes de fonctionnement, en fonction du niveau respectif de la demande en énergie calorifique et de la demande en énergie frigorifique.

Lorsque le rapport entre les puissances calorifique et frigorifique appelées par les consommateurs est supérieur au rapport entre les puissances calorifique et frigorifique produites par la machine, la machine peut adapter la puissance calorifique produite à la puissance calorifique requise par le consommateur de chaleur. Elle produit une puissance frigorifique supérieure à la puissance frigorifique requise par le consommateur de froid. La machine puise au consommateur de froid une partie seulement de la puissance calorifique nécessaire pour alimenter le consommateur de chaleur. Dans ce cas la machine fonctionne selon le mode appelé production calorifique prioritaire, la production calorifique étant appelée production prioritaire et la production frigorifique étant appelée production non prioritaire.

Inversement, lorsque le rapport entre les puissances calorifique et frigorifique appelées par les consommateurs est inférieur au rapport entre les puissances calorifique et frigorifique produites par la machine, la machine peut adapter la puissance frigorifique produite à la puissance frigorifique requise par le consommateur de froid. Elle produit une puissance calorifique supérieure à la puissance calorifique requise par le consommateur de chaleur. La machine puise au consommateur de chaleur une partie seulement de la puissance frigorifique nécessaire pour alimenter le consommateur de froid. Dans ce cas la machine fonctionne selon le mode appelé production frigorifique prioritaire, la production frigorifique étant appelée production prioritaire et la production calorifique étant appelée production non prioritaire.

En mode production calorifique prioritaire, une partie seulement de l'énergie calorifique nécessaire pour alimenter le consommateur de chaleur est puisée dans le consommateur de froid, et la machine doit puiser un complément d'énergie calorifique dans un élément extérieur. En mode production frigorifique prioritaire, une partie seulement de l'énergie frigorifique nécessaire pour alimenter le consommateur de froid est puisée dans le consommateur de chaleur, et c'est un complément d'énergie frigorifique qui doit être puisée dans un élément extérieur.

Cet élément extérieur, assurant l'équilibre énergétique du système en fournissant le complément d'énergie calorifique ou frigorifique, est appelé source externe.

La source externe est définie comme un ou plusieurs éléments capables de fournir indifféremment de l'énergie calorifique ou de l'énergie frigorifique à la machine.

En aérothermie, la source externe est l'air ambiant et l'échange thermique avec cette source est réalisé à travers un échangeur thermique dont le circuit secondaire est en contact direct avec l'air ambiant. La circulation de l'air ambiant au circuit secondaire de l'échangeur est généralement forcée par un ou plusieurs ventilateurs.

En géothermie, la source externe est le sous-sol et l'échange thermique avec cette source est réalisé à travers un ensemble d'échangeurs verticaux, de type sonde géothermique verticale, constitués de canalisations insérées dans le sous-sol. L'échange thermique avec cette source est généralement réalisé à travers un échangeur thermique dont le circuit secondaire est raccordé aux échangeurs verticaux par l'intermédiaire de canalisations, dans lesquelles circule un fluide caloporteur.

Les thermofrigopompes dites géothermiques présentent un meilleur niveau de performance énergétique global, c'est-à-dire moyenné sur une année, que les thermofrigopompes dites aérothermiques.

Le coefficient de performance d'une machine thermodynamique peut être défini comme le rapport entre l'énergie calorifique produite par la machine et l'énergie électrique consommée par le compresseur. Ce coefficient dépend de l'écart entre les températures de condensation et d'évaporation du fluide frigorigène qui sont continuellement adaptées aux températures requises au circuit secondaire des échangeurs fonctionnant en condenseur et en évaporateur. Plus l'écart entre ces deux températures est réduit, plus le coefficient de performance est élevé.

La température du sous-sol est beaucoup moins sujette aux variations saisonnières que la température de l'air ambiant. Les besoins calorifiques étant généralement plus importants durant la période hivernale, lorsque la température du sous-sol est plus élevée que la température de l'air, la performance énergétique des machines exploitant l'énergie calorifique du sous-sol fonctionnent, durant cette période, avec un niveau de performance énergétique supérieur aux machines exploitant l'énergie calorifique contenue dans l'air ambiant. De la même façon, les besoins frigorifiques étant généralement plus importants durant la période estivale, lorsque la température du sous-sol est plus basse que la température de l'air, les machines exploitant l'énergie frigorifique du sous-sol fonctionnent durant cette période avec un niveau de performance énergétique supérieur aux machines exploitant l'énergie frigorifique contenue dans l'air ambiant.

Les thermofrigopompes géothermiques présentent plusieurs inconvénients. Il existe des périodes de l'année pendant lesquelles l'exploitation de la source géothermique est moins favorable pour la performance énergétique de la machine thermodynamique que ne le serait l'exploitation de la source aérothermique. Ces situations dépendent de l'environnement géologique et climatique du lieu où est installée la machine et de la nature des usages des consommateurs d'énergie thermique. Ces situations se rencontrent durant les intersaisons, lorsque la température de l'air ambiant atteint temporairement des valeurs plus favorables que la température du sous-sol. Durant ces périodes, la température de l'air ambiant peut atteindre des valeurs plus élevées que la température du sous-sol alors que les besoins des consommateurs d'énergie thermique sont majoritairement des besoins en énergie calorifique. De la même façon la température de l'air ambiant peut atteindre des valeurs plus basses que la température du sous-sol alors que les besoins des consommateurs d'énergie thermique sont majoritairement des besoins en énergie frigorifique.

Ces situations peuvent également se rencontrer lorsque les consommateurs d'énergie thermique présentent des usages qui ne sont pas en lien avec les saisons. Un exemple caractéristique concerne la consommation d'eau chaude sanitaire, qui est répartie de façon uniforme tout au long de l'année. Ce type d'usage se rencontre couramment dans les bâtiments hospitaliers, dans les bâtiments hôteliers, ou dans le logement. En période hivernale, l'exploitation de l'énergie contenue dans le sous-sol pour la production d'eau chaude est plus favorable que l'exploitation de l'énergie aérothermique. Durant la période estivale, au contraire, l'exploitation de la source géothermique pour cette production calorifique conduit à des niveaux de performance de la machine thermodynamique bien plus faibles en comparaison d'une machine exploitant la source aérothermique.

Un autre exemple concerne le chauffage des bassins des piscines, dont l'eau est renouvelée régulièrement pour des raisons sanitaires. Le besoin de chauffage est effectif toute l'année, y compris en période estivale.

De telles situations se rencontrent également dans le domaine industriel où la demande en énergie frigorifique est effective durant toute l'année, y compris pendant la période hivernale. Pour ces applications, l'exploitation de l'énergie frigorifique de l'air ambiant conduirait pendant la période hivernale à un niveau de performance bien supérieur à l'exploitation de la source géothermique. Pour une thermofrigopompe géothermique, l'énergie thermique contenue dans le sous-sol est située dans l'emprise des échangeurs verticaux. L'énergie contenue dans cette portion du sous-sol ne se renouvelle naturellement que de façon extrêmement lente et limitée. L'exploitation énergétique du sous-sol génère alors localement une variation, à la hausse ou à la baisse, de sa température, qui peut d'ailleurs conduire sur le long terme à l'épuisement de la ressource si cette exploitation s'avère trop importante. La source géothermique, qui est exploitée de façon locale, n'est donc pas inépuisable, au contraire de l'énergie thermique exploitée par les machines aérothermiques, qui est contenue dans l'air ambiant, et qui se renouvelle sans cesse. La quantité d'énergie calorifique ou frigorifique qu'une source géothermique locale peut fournir annuellement, autrement dit sa capacité énergétique, est donc limitée.

Pour une application donnée et un sous-sol présentant localement des propriétés thermiques et hydrogéologiques données, le dimensionnement d'un champ de sondes géothermiques, c'est-à-dire le nombre et la profondeur des échangeurs verticaux et leur emprise dans le sous-sol, dépendra alors essentiellement du niveau de sollicitation énergétique du sous-sol, c'est à dire de la quantité d'énergie calorifique ou frigorifique qui sera prélevée annuellement au sous-sol. Pour augmenter la quantité d'énergie calorifique ou frigorifique qu'une source géothermique locale pourra fournir annuellement, il est nécessaire d'augmenter le dimensionnement du champ de sondes géothermiques, ce qui est très coûteux.

Un autre moyen permettant d'augmenter la capacité de la source géothermique consiste à effectuer une recharge calorifique ou frigorifique du sous-sol à partir d'une autre ressource. L'inertie thermique du sous-sol est alors utilisée pour stocker à une certaine période une énergie calorifique ou frigorifique produite à faible coût énergétique à partir d'une autre source, et la rendre disponible à une période ultérieure, correspondant à la période de demande thermique d'un consommateur d'énergie.

La source aérothermique peut constituer une source d'énergie exploitable à faible coût énergétique à certaines périodes de l'année. En période estivale, l'exploitation de l'énergie calorifique contenue dans l'air ambiant pour recharger le sous-sol en énergie calorifique peut être réalisée avec un haut rendement énergétique. En période hivernale, l'exploitation de l'énergie frigorifique contenue dans l'air ambiant pour recharger le sous-sol en énergie frigorifique, ou autrement dit pour décharger le sous-sol en énergie calorifique, peut être également réalisée avec un haut rendement énergétique.

Le document US20030196445 divulgue une machine thermodynamique qui comporte un compresseur, un condensateur primaire, un dispositif d'expansion principal, un évaporateur primaire et un générateur de vortex montés en série pour former une boucle. Une extrémité d'un échangeur de chaleur est connectée au générateur de vortex ou à l'entrée du condensateur primaire par l'intermédiaire d'une connexion en « T » et de deux vannes. Une autre extrémité de l'échangeur de chaleur est connectée au dispositif d'expansion principal par l'intermédiaire d'une autre vanne ou à la sortie du condensateur primaire par un dispositif d'expansion secondaire.

Le document EP2918949 divulgue un échangeur géothermique et un échangeur aérothermique montées en parallèles et connectés en séries avec un échangeur de chaleur à eau. Chacun des échangeur géothermique ou aérothermique est associé à une vanne. Un compresseur et un conteneur à fluide frigogène sont montés en série et relie échangeur de chaleur à eau ou les échangeur géothermique ou aérothermique dans un sens ou dans un autre au moyen d'une vanne quatre voies.

### Résumé de l'invention

La présente invention a pour but de résoudre les problèmes mentionnés ci-dessus et de proposer une machine thermodynamique de type thermofrigopompe, qui est capable de produire simultanément de l'énergie calorifique et de l'énergie frigorifique à destination respectivement d'un consommateur de chaleur et d'un consommateur de froid, et qui est capable d'exploiter alternativement ou simultanément une ressource de type géothermique et une ressource de type aérothermique.

On tend à résoudre ces besoins au moyen d'une machine thermodynamique, définie par la revendication indépendante 1, qui comporte
- un premier échangeur de chaleur possédant au moins un circuit primaire où circule un fluide frigorigène et au moins un circuit secondaire destiné à être parcouru par un premier fluide caloporteur, le premier échangeur de chaleur étant configuré pour condenser le fluide frigorigène ;
- un deuxième échangeur de chaleur possédant au moins un circuit primaire où circule le fluide frigorigène et au moins un circuit secondaire destiné à être parcouru par un deuxième fluide caloporteur, le deuxième échangeur de chaleur étant configuré pour évaporer le fluide frigorigène ;
- un troisième échangeur de chaleur destiné à coopérer avec une source géothermique et possédant au moins un circuit primaire où circule le fluide frigorigène et au moins un circuit secondaire, le troisième échangeur de chaleur étant configuré pour évaporer ou condenser le fluide frigorigène ;

- un quatrième échangeur de chaleur destiné à coopérer avec une source aérothermique et possédant au moins un circuit primaire où circule le fluide frigorigène et au moins un circuit secondaire, le quatrième échangeur de chaleur étant configuré pour évaporer ou condenser le fluide frigorigène ;
- au moins un premier circuit frigorigène à l'intérieur duquel circule le fluide frigorigène, le au moins un premier circuit frigorigène connectant le premier échangeur de chaleur, le deuxième échangeur de chaleur, le troisième échangeur de chaleur, et le quatrième échangeur de chaleur. Le au moins un premier circuit frigorigène comporte :
- un compresseur monté entre une sortie du deuxième échangeur de chaleur et une entrée du premier échangeur de chaleur ;
- un premier détendeur monté entre une sortie du premier échangeur de chaleur et une entrée du deuxième échangeur de chaleur ;
- un premier nœud de liaison reliant la sortie du compresseur à l'entrée du premier échangeur de chaleur, à un premier dispositif de commutation et à un deuxième dispositif de commutation ;
- un deuxième nœud de liaison reliant une sortie du premier échangeur de chaleur à une entrée du premier détendeur et à un troisième dispositif de commutation ;
- un troisième nœud de liaison reliant l'entrée du deuxième échangeur de chaleur avec une sortie du premier détendeur et avec le troisième dispositif de commutation ;
- un quatrième nœud de liaison reliant la sortie du deuxième échangeur de chaleur à l'entrée du compresseur, au premier dispositif de commutation et au deuxième dispositif de commutation ;
- le premier dispositif de commutation étant configuré pour définir sélectivement une première configuration ou une seconde configuration, la première configuration définissant un premier canal de circulation du fluide frigorigène reliant le premier nœud de liaison à la première entrée/sortie du troisième échangeur de chaleur et empêchant la circulation du fluide frigorigène à travers le premier dispositif de commutation jusqu'au quatrième nœud de liaison, la deuxième configuration définissant un deuxième canal de circulation du fluide frigorigène reliant une première entrée/sortie du troisième échangeur de chaleur au quatrième nœud de liaison et empêchant la circulation du fluide frigorigène à travers le premier dispositif de commutation depuis le premier nœud de liaison ;
- le deuxième dispositif de commutation étant configuré pour définir sélectivement une première configuration ou une seconde configuration, la première configuration définissant un premier canal de circulation du fluide frigorigène reliant le premier nœud de liaison à la première entrée/sortie du quatrième échangeur de chaleur et empêchant la circulation du fluide frigorigène à travers le deuxième dispositif de commutation jusqu'au quatrième nœud de liaison, la deuxième configuration définissant un deuxième canal de circulation du fluide frigorigène reliant une première entrée/sortie du quatrième échangeur de chaleur au quatrième nœud de liaison et empêchant la circulation du fluide frigorigène à travers le deuxième dispositif de commutation depuis le premier nœud de liaison ;
- le troisième dispositif de commutation étant configuré pour définir sélectivement une première configuration, une seconde configuration ou une troisième configuration, la première configuration définissant un premier canal de circulation du fluide frigorigène reliant le deuxième nœud de liaison à une deuxième entrée/sortie du troisième échangeur de chaleur et à une deuxième entrée/sortie du quatrième échangeur de chaleur et empêchant la circulation du fluide frigorigène à travers le troisième dispositif de commutation jusqu'au troisième nœud de liaison, la deuxième configuration définissant un deuxième canal de circulation du fluide frigorigène reliant la deuxième entrée/sortie du troisième échangeur de chaleur et la deuxième entrée/sortie du quatrième échangeur de chaleur au troisième nœud de liaison et empêchant la circulation du fluide frigorigène à travers le troisième dispositif de commutation depuis le deuxième nœud de liaison, la troisième configuration empêchant la circulation du fluide frigorigène à travers le troisième dispositif de commutation depuis le deuxième nœud de liaison et empêchant la circulation du fluide frigorigène à travers le troisième dispositif de commutation jusqu'au troisième nœud de liaison et reliant la deuxième entrée/sortie du troisième échangeur de chaleur et la deuxième entrée/sortie du quatrième échangeur de chaleur;
- un second détenteur monté entre le troisième dispositif de commutation et la deuxième entrée/sortie du troisième échangeur de chaleur ;
- un troisième détenteur monté entre le troisième dispositif de commutation et la deuxième entrée/sortie du quatrième échangeur de chaleur.

Avantageusement, le second détenteur et le troisième détendeur sont des détendeurs bidirectionnels.

Dans un développement, la machine comporte un circuit de commande configuré pour définir sélectivement au moins deux modes de fonctionnement parmi
- un premier mode de fonctionnement dans lequel le premier dispositif de commutation et le deuxième dispositif de commutation sont dans la deuxième configuration, et le troisième dispositif de commutation est dans la première configuration, pour transférer des calories depuis le circuit secondaire du deuxième échangeur de chaleur et/ou depuis un circuit secondaire du troisième échangeur de chaleur et/ou depuis un circuit secondaire du quatrième échangeur de chaleur vers le circuit secondaire du premier échangeur de chaleur ;
- un deuxième mode de fonctionnement dans lequel le premier dispositif de commutation et le deuxième dispositif de commutation sont dans la première configuration, et le troisième dispositif de commutation est dans la seconde configuration, pour transférer des calories depuis le circuit secondaire du deuxième échangeur de chaleur vers le circuit secondaire du premier échangeur de chaleur et/ou vers le circuit secondaire du troisième échangeur de chaleur et/ou vers le circuit secondaire du quatrième échangeur de chaleur;
- un troisième mode de fonctionnement dans lequel le premier dispositif de commutation est dans la deuxième configuration, le deuxième dispositif de commutation est dans la première configuration et le troisième dispositif de commutation est dans la troisième configuration, pour transférer des calories depuis le circuit secondaire du troisième échangeur de chaleur vers le circuit secondaire du quatrième échangeur de chaleur;
- un quatrième mode de fonctionnement dans lequel le premier dispositif de commutation est dans la première configuration, le deuxième dispositif de commutation est dans la deuxième configuration et le troisième dispositif de commutation est dans la troisième configuration, pour transférer des calories depuis le circuit secondaire du quatrième échangeur de chaleur vers le circuit secondaire du troisième échangeur de chaleur;

Selon un autre développement, la machine comporte :
- un premier capteur de température configuré pour mesurer la température à l'entrée du au moins un circuit secondaire du troisième échangeur de chaleur ;
- un deuxième capteur de température configuré pour mesurer la température à 1' entrée du au moins un circuit secondaire du quatrième échangeur de chaleur ; et dans laquelle le deuxième détendeur et le troisième détendeur sont à taux d'ouverture variable. Le circuit de commande est configuré pour contrôler le taux d'ouverture du deuxième détendeur et le taux d'ouverture du troisième détendeur et ajuster la puissance calorifique ou frigorifique transmise respectivement à travers le troisième échangeur de chaleur et le quatrième échangeur de chaleur en fonction des valeurs de températures mesurées à l'entrée du au moins un circuit secondaire du troisième échangeur de chaleur et à l'entrée du au moins un circuit secondaire du quatrième échangeur de chaleur.

Avantageusement le circuit de commande est configuré pour fermer le deuxième détendeur dans le premier mode de fonctionnement quand le circuit de commande constate que la valeur de température à l'entrée du au moins un circuit secondaire du troisième échangeur de chaleur est inférieure à la valeur de température à l'entrée du au moins un circuit secondaire du quatrième échangeur de chaleur.

Dans un mode de réalisation particulier, le circuit de commande est configuré pour fermer le troisième détendeur dans le premier mode de fonctionnement quand le circuit de commande constate que la valeur de température à l'entrée du au moins un circuit secondaire du troisième échangeur de chaleur est supérieure à la valeur de température à l'entrée du au moins un circuit secondaire du quatrième échangeur de chaleur.

Préférentiellement, le circuit de commande est configuré pour fermer le deuxième détendeur dans le deuxième mode de fonctionnement quand le circuit de commande constate que la valeur de température à l'entrée du au moins un circuit secondaire du troisième échangeur de chaleur est supérieure à la valeur de température à l'entrée du au moins un circuit secondaire du quatrième échangeur de chaleur.

Dans un mode de réalisation particulier, le circuit de commande est configuré pour fermer le troisième détendeur dans le deuxième mode de fonctionnement quand le circuit de commande constate que la valeur de température à l'entrée du au moins un circuit secondaire du troisième échangeur de chaleur est inférieure à la valeur de température à l'entrée du au moins un circuit secondaire du quatrième échangeur de chaleur.

Avantageusement, la machine comporte des moyens de mesure de la température de la source géothermique et dans laquelle le circuit de commande comporte un modèle prévisionnel de la température de la source géothermique dans le temps, le circuit de commande étant configuré pour activer le troisième mode de fonctionnement ou le quatrième mode de fonctionnement lorsque le circuit de commande constate que la température de la source géothermique s'écarte de la température du modèle prévisionnel au-delà d'une valeur seuil.

Dans un mode de réalisation particulier, les moyens de mesure de la température de la source géothermique comportent le premier capteur de température et un dispositif d'estimation configuré pour estimer la température de la source géothermique à partir de la température à l'entrée du au moins un circuit secondaire du troisième échangeur de chaleur.

Dans un développement, les moyens de mesure de la température de la source géothermique comportent un troisième capteur de température destiné à être installé dans le sous-sol à proximité de la source géothermique.

Avantageusement, le circuit de commande est configuré pour activer le troisième mode de fonctionnement seulement lorsque le circuit de commande constate que la température à l'entrée du au moins un circuit secondaire du quatrième échangeur de chaleur est inférieure à la température à l'entrée du au moins un circuit secondaire du troisième échangeur de chaleur et/ou pour activer le quatrième mode de fonctionnement seulement lorsque le circuit de commande constate que la température à l'entrée du au moins un circuit secondaire du quatrième échangeur de chaleur est supérieure à la température à l'entrée du au moins un circuit secondaire du troisième échangeur de chaleur.

De manière avantageuse, comme défini par la revendication dépendante 13, la machine comporte un second circuit frigorigène distinct du premier circuit frigorigène à l'intérieur duquel circule un second fluide frigorigène, le second circuit frigorigène connectant le premier échangeur de chaleur, le deuxième échangeur de chaleur, le troisième échangeur de chaleur et le quatrième échangeur de chaleur, le second circuit frigorigène possédant un compresseur, un premier détendeur, un deuxième détendeur et un troisième détendeur, un premier nœud de liaison, un deuxième nœud de liaison, un troisième nœud de liaison, un quatrième nœud de liaison, un premier dispositif de commutation, un deuxième dispositif de commutation et un troisième dispositif de commutation agencés de manière semblable au premier circuit frigorigène.

Dans un autre développement, le circuit de commande est configuré pour définir sélectivement pour le second circuit frigorigène des premier, deuxième, troisième et quatrième modes de fonctionnement semblables aux premier, deuxième, troisième et quatrième modes de fonctionnement du premier circuit frigorigène.

Préférentiellement, le circuit de commande est configuré pour définir une configuration dans laquelle le premier circuit frigorigène est dans le premier mode de fonctionnement, le troisième détendeur du premier circuit frigorigène étant maintenu fermé, et le second circuit frigorigène est dans le troisième mode de fonctionnement.

Il est également avantageux de prévoir que le circuit de commande soit configuré pour définir une configuration dans laquelle le premier circuit frigorigène est dans le premier mode de fonctionnement, le second détendeur du premier circuit frigorigène étant maintenu fermé, et le second circuit frigorigène est dans le quatrième mode de fonctionnement.

Dans une configuration particulière, le circuit de commande est configuré pour définir une configuration dans laquelle le premier circuit frigorigène est dans le deuxième mode de fonctionnement, le troisième détendeur du premier circuit frigorigène étant maintenu fermé, et le second circuit frigorigène est dans le quatrième mode de fonctionnement.

Dans un autre développement, le circuit de commande est configuré pour définir une configuration dans laquelle le premier circuit frigorigène est dans le deuxième mode de fonctionnement, le second détendeur du premier circuit frigorigène étant maintenu fermé, et le second circuit frigorigène est dans le troisième mode de fonctionnement.

L'invention a également pour objet des procédés alternatifs de fonctionnement, selon les revendications indépendantes 19 et 20, d'une machine de type thermofrigopompe qui permet d'exploiter une ressource de type géothermique et une ressource de type aérothermique et qui permet de gérer de façon active la source géothermique en effectuant une recharge calorifique ou frigorifique de la source géothermique à partir de la source aérothermique.

On tend à résoudre ces besoins au moyen d'un premier groupe d'alternatives d'un procédé de fonctionnement d'une machine thermodynamique, selon la revendication indépendante 19, comportant les étapes:
- fournir une machine thermodynamique selon l'une des configurations précédentes ;
- faire fonctionner la machine thermodynamique dans un mode de fonctionnement choisi parmi :
   i) un montage parallèle du deuxième échangeur de chaleur, du troisième échangeur de chaleur et du quatrième échangeur de chaleur, le deuxième échangeur de chaleur, le troisième échangeur de chaleur et le quatrième échangeur de chaleur fonctionnant en évaporateurs de fluide frigorigène, entre la sortie du premier échangeur de chaleur qui fonctionne en condenseur de fluide frigorigène, et l'entrée du compresseur,
   ii) un montage parallèle du premier échangeur de chaleur, du troisième échangeur de chaleur et du quatrième échangeur de chaleur, le premier échangeur de chaleur, le troisième échangeur de chaleur et le quatrième échangeur de chaleur fonctionnant en condenseurs de fluide frigorigène, entre la sortie du compresseur et l'entrée du deuxième échangeur de chaleur qui fonctionne en évaporateur de fluide frigorigène,
   iii) un montage série du quatrième échangeur de chaleur qui fonctionne en condenseur de fluide frigorigène, et du troisième échangeur de chaleur qui fonctionne en évaporateur de fluide frigorigène, entre la sortie du compresseur et l'entrée du compresseur,
   iv) un montage série du troisième échangeur de chaleur qui fonctionne en condenseur de fluide frigorigène, et du quatrième échangeur de chaleur qui fonctionne en évaporateur de fluide frigorigène, entre la sortie du compresseur et l'entrée du compresseur.

Alternativement, on tend à résoudre ces besoins au moyen d'un deuxième groupe d'alternatives d'un procédé de fonctionnement d'une machine thermodynamique, selon la revendication indépendante 20, comportant les étapes:
- fournir une machine thermodynamique selon l'une des configurations précédentes comprenant au moins les caractéristiques combinées des revendications 1 et 13;
- faire fonctionner la machine thermodynamique dans au moins un des modes de réalisation choisi parmi :
   i) le premier échangeur de chaleur condense le premier fluide frigorigène, le deuxième échangeur de chaleur évapore le premier fluide frigorigène, le troisième échangeur de chaleur évapore le premier fluide frigorigène et le second fluide frigorigène, le quatrième échangeur de chaleur condense le second fluide frigorigène, le premier fluide frigorigène ne passe pas au travers du quatrième échangeur de chaleur, et le second fluide frigorigène ne passe pas au travers des premier et second échangeurs de chaleur,
   ii) le premier échangeur de chaleur condense le premier fluide frigorigène, le deuxième échangeur de chaleur évapore le premier fluide frigorigène, le troisième échangeur de chaleur condense le second fluide frigorigène, le quatrième échangeur de chaleur évapore le premier fluide frigorigène et le second fluide frigorigène, le premier fluide frigorigène ne passe pas au travers du troisième échangeur de chaleur, et le second fluide frigorigène ne passe pas au travers des premier et second échangeurs de chaleur,
   iii) le premier échangeur de chaleur condense le premier fluide frigorigène, le deuxième échangeur de chaleur évapore le premier fluide frigorigène, le troisième échangeur de chaleur condense le premier fluide frigorigène et le second fluide frigorigène, le quatrième échangeur de chaleur évapore le second fluide frigorigène, le premier fluide frigorigène ne passe pas au travers du quatrième échangeur de chaleur, et le second fluide frigorigène ne passe pas au travers des premier et second échangeurs de chaleur,
   iv) le premier échangeur de chaleur condense le premier fluide frigorigène, le deuxième échangeur de chaleur évapore le premier fluide frigorigène, le troisième échangeur de chaleur évapore le second fluide frigorigène, le quatrième échangeur de chaleur condense le premier fluide frigorigène et le second fluide frigorigène, le premier fluide frigorigène ne passe pas au travers du troisième échangeur de chaleur, et le second fluide frigorigène ne passe pas au travers des premier et second échangeurs de chaleur.

### Description sommaire des dessins

D'autres avantages et caractéristiques ressortiront plus clairement de la description qui va suivre de modes particuliers de réalisation donnés à titre d'exemples non limitatifs et illustrés à l'aide des dessins annexés, où toute réalisation de l'invention comprend au moins l'ensemble des caractéristiques d'une des revendications indépendantes. Dans les dessins:

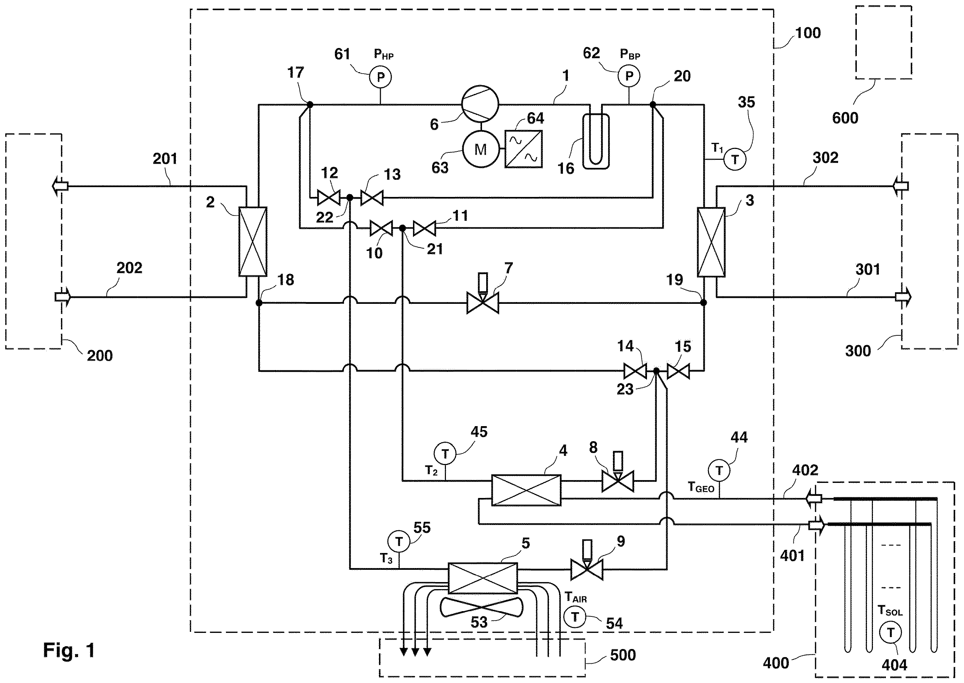

la figure 1 représente, de manière schématique, une machine thermodynamique selon l'invention à l'interface entre un consommateur d'énergie calorifique, un consommateur d'énergie frigorifique, une première source externe géothermique, et une deuxième source externe aérothermique, selon un premier mode de réalisation avec un circuit frigorigène ;

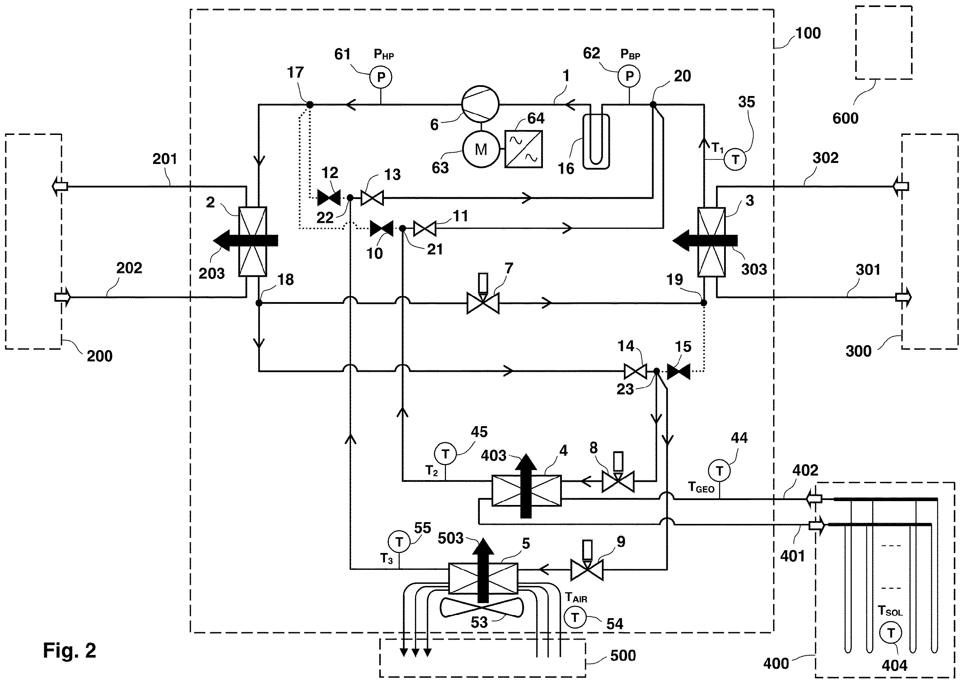

la figure 2 représente, de manière schématique, une machine thermodynamique selon l'invention, fonctionnant selon un mode appelé production calorifique prioritaire ;

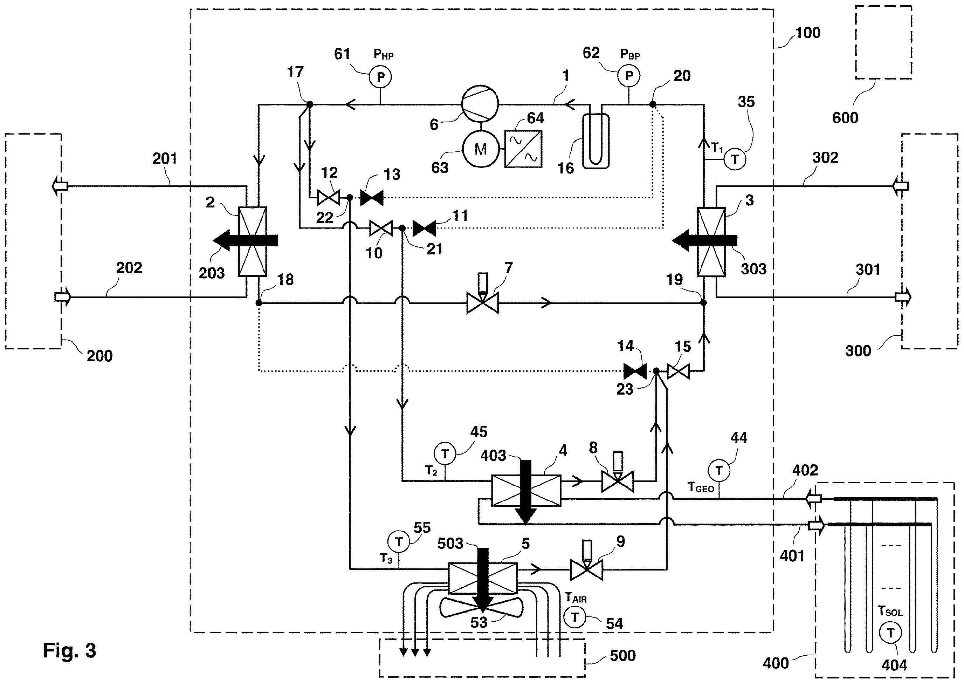

la figure 3 représente, de manière schématique, une machine thermodynamique selon l'invention, fonctionnant selon un mode appelé production frigorifique prioritaire ;

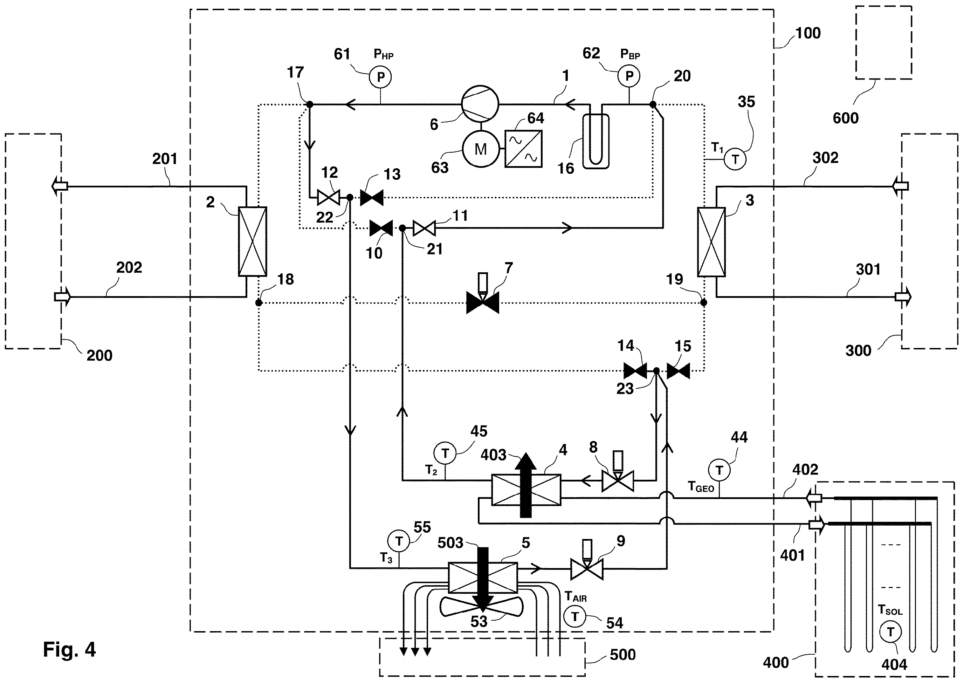

la figure 4 représente, de manière schématique, une machine thermodynamique selon l'invention, dans un mode de fonctionnement de type décharge de la source géothermique ;

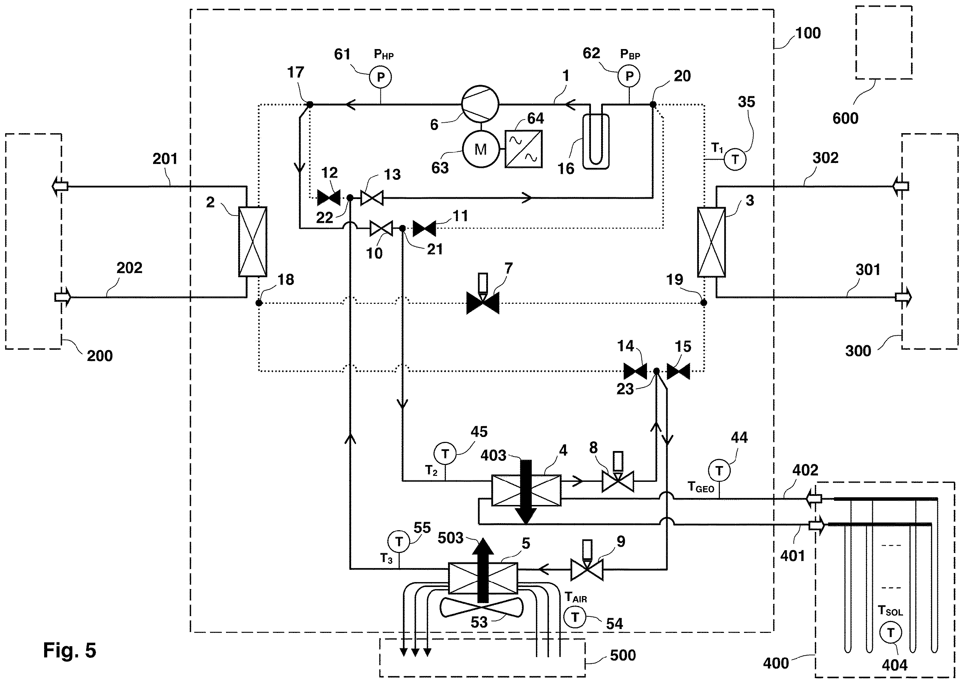

la figure 5 représente, de manière schématique, une machine thermodynamique selon l'invention, dans un mode de fonctionnement de type recharge de la source géothermique ;

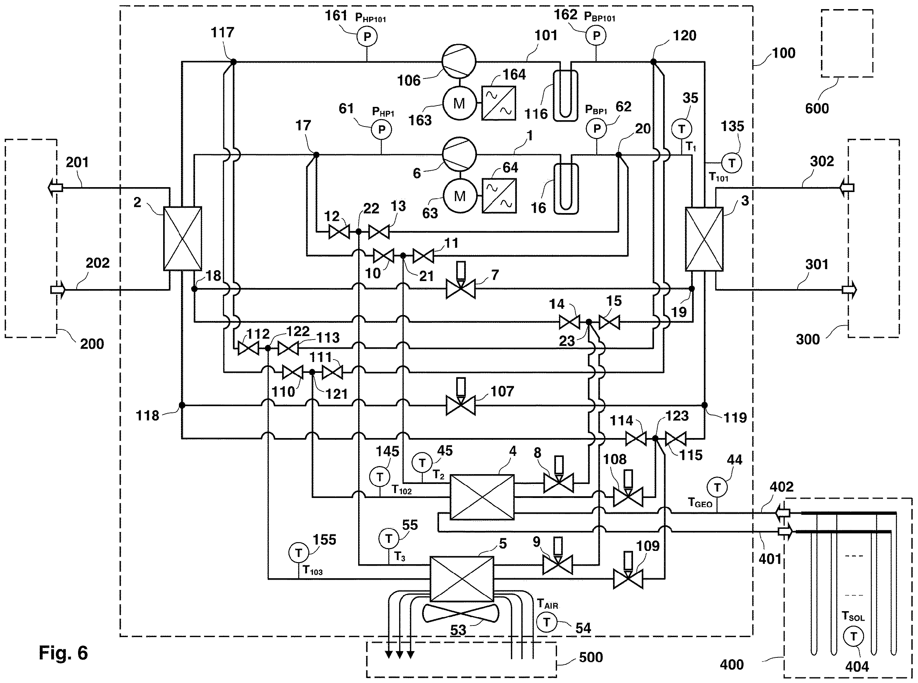

la figure 6 représente, de manière schématique, un deuxième mode de réalisation d'une machine thermodynamique selon l'invention à l'interface entre un consommateur d'énergie calorifique, un consommateur d'énergie frigorifique, une première source externe géothermique, et une deuxième source externe aérothermique, avec deux circuits frigorigènes ;

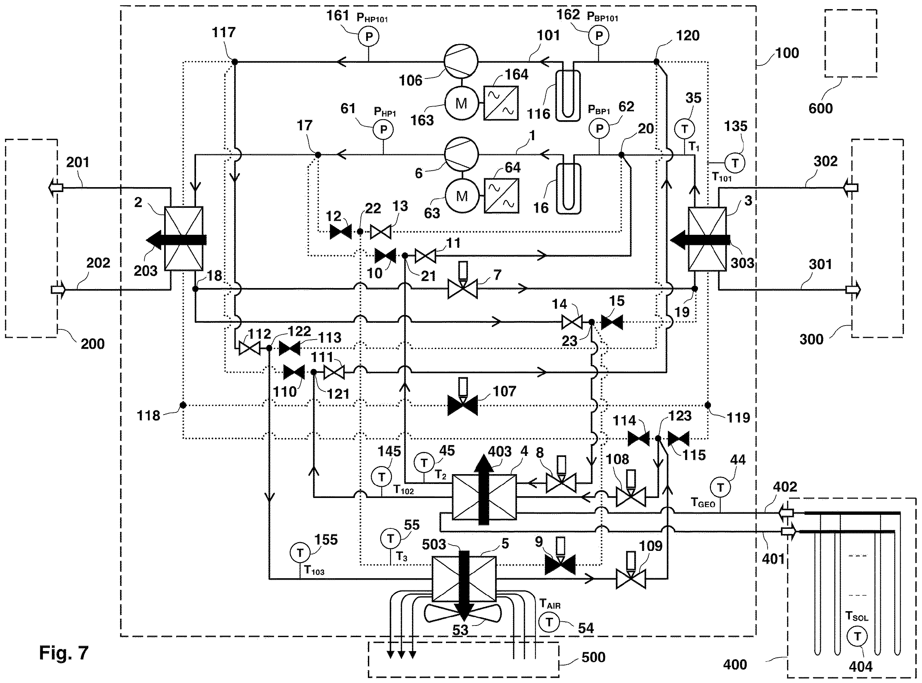

la figure 7 représente, de manière schématique, une machine thermodynamique selon le deuxième mode de réalisation, dont le premier circuit frigorigène réalise une production calorifique prioritaire où seule la source géothermique est exploitée et dont le deuxième circuit frigorigène réalise la décharge de la source géothermique ;

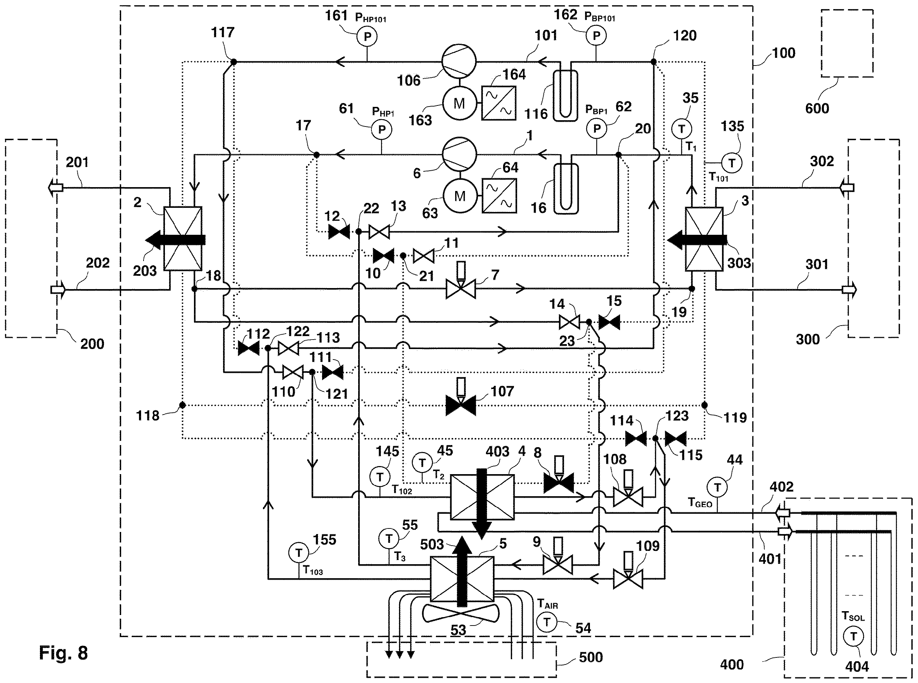

la figure 8 représente, de manière schématique, une machine thermodynamique selon le deuxième mode de réalisation, dont le premier circuit frigorigène réalise une production calorifique prioritaire où seule la source aérothermique est exploitée, et dont le deuxième circuit frigorigène réalise la recharge de la source géothermique ;

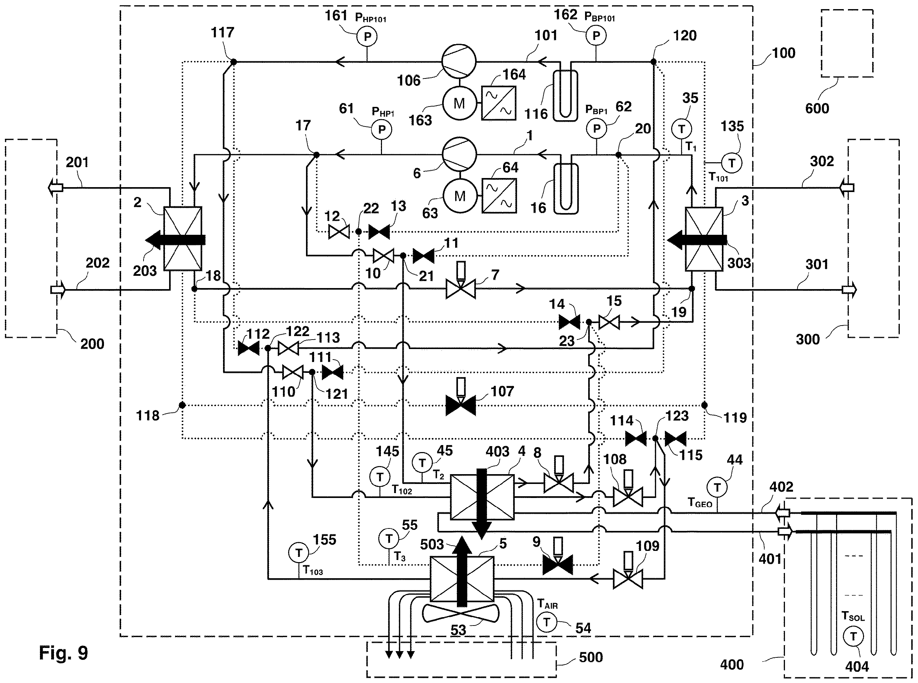

la figure 9 représente, de manière schématique, une machine thermodynamique selon le deuxième mode de réalisation, dont le premier circuit frigorigène réalise une production frigorifique prioritaire où seule la source aérothermique est exploitée, et dont le deuxième circuit frigorigène réalise la décharge de la source géothermique ;

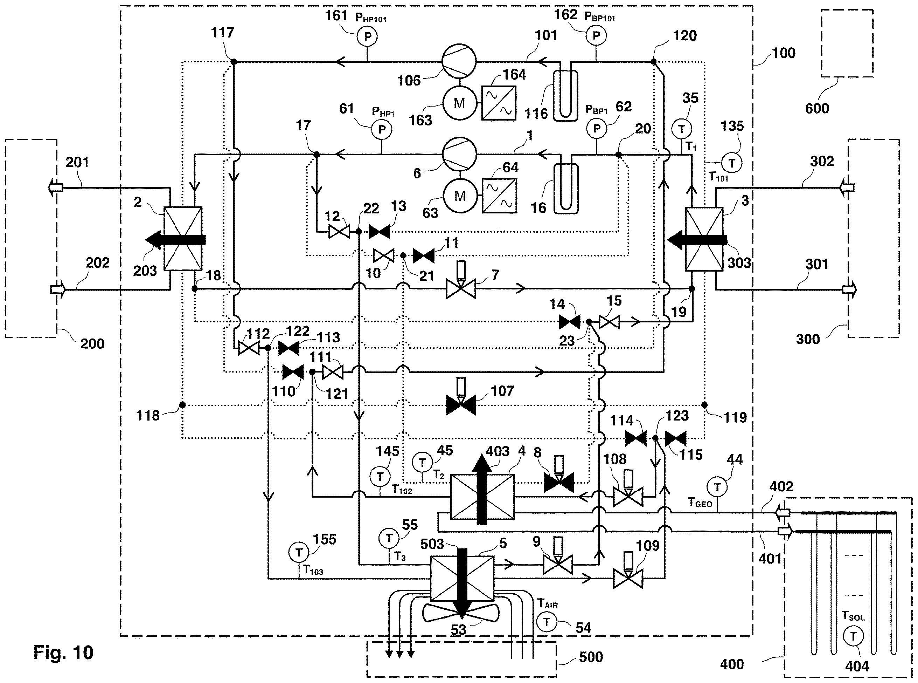

la figure 10 représente, de manière schématique, une machine thermodynamique selon le deuxième mode de réalisation, dont le premier circuit frigorigène fonctionne en production frigorifique prioritaire où seule la source géothermique est exploitée, et dont le deuxième circuit frigorigène réalise la recharge de la source géothermique.

### Description des modes de réalisation

La machine thermodynamique 100 est de type thermofrigopompe, c'est-à-dire que la machine thermodynamique possède au moins une pompe à chaleur dont l'énergie utile est rejetée sur une source chaude et est prélevée d'une source froide. L'énergie utile est prélevée d'une ou plusieurs sources thermiques externes. Une source thermique externe est définie comme un ou plusieurs éléments capables de fournir indifféremment de l'énergie calorifique ou de l'énergie frigorifique à la machine thermodynamique.

De préférence, les sources thermiques externes sont des éléments naturels, tel que l'air ambiant, l'eau du milieu naturel, le sol ou tout type d'élément extérieur. La machine thermodynamique peut être munie d'un ou plusieurs systèmes intermédiaires d'échange thermique pour adresser chacun des éléments extérieurs. La machine thermodynamique est destinée à fonctionner avec une première source thermique externe qui est une source géothermique et avec une deuxième source thermique externe qui est une source aérothermique.

Le consommateur d'énergie calorifique 200 est par exemple un système de chauffage et/ou un producteur d'eau chaude de préférence sanitaire. Le consommateur d'énergie frigorifique 300 est par exemple un système de refroidissement.

La machine thermodynamique 100 possède une pluralité de canalisations dans lesquelles un ou plusieurs fluides peuvent circuler. Les fluides peuvent être sous la forme liquide ou gazeuse. Le sens de circulation du fluide est matérialisé par des flèches sur les figures 2, 3, 4, 5, 7, 8, 9 et 10. Les canalisations autorisant une circulation de fluide sont représentées par un trait plein alors que les canalisations n'autorisant pas une circulation de fluide sont matérialisées par des pointillés. La machine thermodynamique possède des vannes et des détendeurs. Les vannes et détendeurs sont indiqués en blanc lorsqu'ils sont en position ouverte autorisant la circulation d'un fluide. Les vannes et détendeurs en position fermée sont indiqués en noir empêchant la circulation du fluide. Les flèches disposées sur les échangeurs de chaleur indiquent un transfert de chaleur au travers des échangeurs thermiques. Le sens des flèches indique le sens d'écoulement de la chaleur. Une flèche sortant de la machine thermodynamique 100 indique un transfert de puissance calorifique de la machine 100 vers l'extérieur, alors qu'une flèche entrant dans la machine thermodynamique 100 indique un transfert de puissance calorifique de l'extérieur vers la machine 100.

La machine thermodynamique 100 comprend un circuit frigorigène 1 dans lequel circule un fluide frigorigène ou au moins un fluide frigorigène. Le fluide frigorigène peut être pur ou être un mélange de fluides. Le fluide frigorigène peut se présenter sous forme gazeuse ou liquide en fonction de la pression et de la température dans le circuit frigorigène et notamment dans les échangeurs de chaleur. De manière avantageuse, les températures de changement d'état liquide-gaz du fluide frigorigène sont situées à l'intérieur de la gamme de températures de fonctionnement de la machine thermodynamique. Le fluide frigorigène est préférentiellement choisi parmi des Hydro Fluoro Carbones, par exemple le R134a (1,1,1,2-tétrafluoroéthane), le R410A (mélange de difuorométhane et 1,1,1,2,2-pentafluoroéthane), le R407C (mélange de 1,1,1,2-tétrafluoroéthane, 1,1,1,2,2-pentafluoroéthane et de difuorométhane), ou parmi les Hydro Fluoro Oléfines, par exemple le R1234ze (trans-1,3,3,3-Tétrafluoroprop-1-ène), le R-1233zd (trans-1-chloro-3,3,3-trifluoro-1-propene), ou des mélanges tels que le R452B, ou le R545B. Préférentiellement, la température de changement d'état liquide-gaz du fluide frigorigène est comprise entre -50°C et 100°C.

La thermofrigopompe 100 possède un premier échangeur thermique 2, appelé échangeur condenseur 2, qui produit de l'énergie calorifique. Le premier échangeur thermique 2 alimente un consommateur d'énergie calorifique 200 également appelé source chaude au moyen d'un premier fluide caloporteur. Le premier fluide caloporteur circule dans des canalisations 201 et 202 qui relient un secondaire du premier échangeur thermique 2 avec le consommateur d'énergie calorifique 200. Le consommateur d'énergie calorifique est par exemple un système de chauffage ou un producteur d'eau chaude. Le premier échangeur thermique 2 permet de transférer de l'énergie calorifique depuis le fluide frigorigène circulant au circuit primaire de l'échangeur thermique 2 vers le consommateur d'énergie calorifique 200 tout en assurant la condensation du fluide frigorigène.

La thermofrigopompe 100 produit de l'énergie frigorifique à travers un deuxième échangeur thermique 3, appelé échangeur évaporateur 3. Le deuxième échangeur thermique 3 alimente un consommateur de froid 300 également appelé source froide au moyen d'un deuxième fluide caloporteur circulant dans des canalisations 301 et 302. Les canalisations 301 et 302 relient un secondaire du deuxième échangeur thermique 3 avec le consommateur de froid 300. Le consommateur de froid est par exemple un système de refroidissement. Le deuxième échangeur thermique 3 permet de transférer de l'énergie frigorifique depuis le fluide frigorigène circulant au circuit primaire de l'échangeur thermique 3 vers le consommateur d'énergie frigorifique 300 tout en assurant l'évaporation du fluide frigorigène.

La machine thermodynamique 100 possède un troisième échangeur thermique 4 à travers lequel la machine thermodynamique 100 échange de l'énergie calorifique ou frigorifique avec la source géothermique 400. Le circuit secondaire du troisième échangeur thermique 4 peut être en contact direct avec la source géothermique 400, ou reliée thermiquement à la source géothermique 400 par l'intermédiaire d'un troisième fluide caloporteur. Le troisième échangeur thermique 4 permet de transférer de l'énergie calorifique ou frigorifique depuis le fluide frigorigène circulant au circuit primaire de l'échangeur thermique 4 vers la source géothermique 400 tout en assurant la condensation ou l'évaporation du fluide frigorigène.

Dans un mode de réalisation préférentiel, la source géothermique 400 est le sous-sol, muni d'un ensemble d'échangeurs verticaux de type sonde géothermique verticale. La température de la source géothermique 400 est avantageusement comprise entre -10°C et +30°C. Le troisième fluide caloporteur circule dans des canalisations 401 et 402 qui relient le circuit secondaire du troisième échangeur thermique 4 avec l'ensemble d'échangeurs verticaux en contact avec la source géothermique 400.

La machine thermodynamique 100 possède un quatrième échangeur thermique 5 à travers lequel la machine thermodynamique 100 échange de l'énergie calorifique ou frigorifique avec la source aérothermique 500. Le circuit secondaire du quatrième échangeur de chaleur 5 peut être en contact direct avec la source aérothermique 500, ou relié thermiquement à la source aérothermique 500 par l'intermédiaire d'un quatrième fluide caloporteur. Le quatrième échangeur thermique 5 permet de transférer de l'énergie calorifique ou frigorifique depuis le fluide frigorigène circulant au circuit primaire de l'échangeur thermique 5 vers la source aérothermique 500 tout en assurant la condensation ou l'évaporation du fluide frigorigène.

Dans un mode de réalisation préférentiel, la source aérothermique 500 est l'air ambiant, en contact direct avec le circuit secondaire du quatrième échangeur de chaleur 5, la circulation de l'air ambiant au circuit secondaire du quatrième échangeur thermique 5 peut être assurée par un ventilateur 53. La température de la source aérothermique 500 est avantageusement comprise entre -40°C et +50°C.

Les premier, deuxième, troisième et quatrième fluides caloporteurs peuvent être identiques ou différents et être présents indépendamment purs ou sous la forme d'un mélange. Chaque fluide caloporteur peut également comporter des substances minérales. De préférence, le fluide caloporteur ne change pas d'état lors du transfert de chaleur entre un échangeur de chaleur et un consommateur de chaud/froid ou une source externe. Le fluide caloporteur peut être choisi parmi l'eau, l'air, une solution aqueuse, du monopropylène glycol, du monoéthylène glycol, des solutions alcooliques ou des sels.

Le circuit frigorigène 1 est connecté au circuit primaire du premier échangeur de chaleur 2, au circuit primaire du deuxième échangeur de chaleur 3, au circuit primaire du troisième échangeur de chaleur 4 et au circuit primaire du quatrième échangeur de chaleur 5. Le fluide frigorigène circule de manière à déplacer des calories entre les échangeurs de chaleur. Le circuit frigorigène 1 alimente chaque échangeur de chaleur en fluide frigorigène. Le circuit frigorigène 1 possède de multiples canalisations reliant les entrées et les sorties des échangeurs de chaleur entre eux afin de pouvoir définir différents sens de circulation du fluide frigorigène et ainsi différents modes de fonctionnement.

La machine thermodynamique 100 comprend avantageusement un premier capteur de température 44 configuré pour mesurer la température TGEO du fluide caloporteur en entrée du secondaire de l'échangeur de chaleur 4 et en provenance de la source géothermique 400, et avantageusement un deuxième capteur de température 54 configuré pour mesurer la température TAIR du gaz formant la source aérothermique 500. La mesure des deux températures peut être envoyée à un circuit de commande 600 qui est configuré pour sélectionner à chaque instant la ressource la plus avantageuse, entre les ressources 400 et 500, quant au niveau de performance de la machine. Le circuit de commande 600 est configuré pour sélectionner la source de chaleur ou de froid qui est la plus proche de la température de production requise pour alimenter la charge prioritaire. Ainsi, lorsque la machine doit produire prioritairement de l'énergie calorifique pour alimenter la charge calorifique 200 au moyen de l'échangeur condenseur 2, le circuit de commande 600 sélectionnera la source qui présente la température qui est plus élevée. Le circuit commande choisira la source aérothermique si la température TAIR est supérieure à TGEO ou il choisira la source géothermique si la température TGEO est supérieure à TAIR. Au contraire, lorsque la machine produit prioritairement de l'énergie frigorifique pour alimenter la charge frigorifique 300 au moyen de l'échangeur évaporateur 3, le circuit de commande sélectionnera la source qui présente la température la plus basse. Le circuit de commande sélectionnera la source aérothermique si la température TAIR est inférieure à la température TGEO ou la source géothermique si la température TGEO est inférieure à TAIR.

Avantageusement, la machine thermodynamique 100 comprend un troisième capteur de température 404 configuré pour mesurer la température TSOL du sous-sol à l'intérieur de la source géothermique 400, dans l'emprise des échangeurs verticaux. Le troisième capteur de température 404 est relié au circuit de commande 600. La mesure de la température du sous-sol est avantageusement utilisée pour suivre à chaque instant l'état de la source géothermique 400, c'est-à-dire la température du sous-sol au niveau de la source géothermique. En alternative, la température du sous-sol est estimée au moyen de la température au circuit secondaire du troisième échangeur de chaleur 4.

La température de la source géothermique peut être comparée à une température prévisionnelle qui évolue dans le temps et qui représente l'évolution recherchée de la source géothermique par exemple au cours d'une année. Le circuit de commande 600 peut être configuré pour comparer la température de la source géothermique avec la température prévisionnelle. Lorsque le circuit de commande 600 constate que la température de la source géothermique s'écarte de la température prévisionnelle d'une valeur supérieure à une valeur seuil, le circuit de commande 600 peut activer des phases de décharge ou de recharge de la source géothermique 400.

Dans un mode de réalisation particulier, le circuit de commande 600 utilise la température TGEO mesurée par le premier capteur de température 44 en association avec un circuit d'estimation afin de pouvoir estimer la température du sous-sol au niveau de la source géothermique au moyen de la température présente au circuit secondaire du troisième échangeur de chaleur 4. Le circuit d'estimation est configuré pour estimer la température de la source géothermique à partir de la température TGEO.

La mesure de la température de l'air ambiant au moyen du deuxième capteur de température 54 est comparée à la température de la source géothermique par le circuit de commande 600. Cette comparaison permet au circuit de commande 600 d'activer les opérations de recharge et de décharge calorifique de la source géothermique 400 préférentiellement durant les périodes favorables sur le plan énergétique. Par exemple, la décharge calorifique depuis la source géothermique 400 vers la source aérothermique 500 peut être activée lorsque la température de l'air TAIR est inférieure à la température du sous-sol au niveau de la source géothermique 400 et préférentiellement seulement dans ce cas de figure. De la même façon, la recharge calorifique de la source géothermie 400 depuis la source aérothermique 500 peut être activée lorsque la température de l'air TAIR est supérieure à la température du sous-sol au niveau de la source géothermique 400 et préférentiellement seulement dans ce cas de figure.

La machine thermodynamique 100 comprend un compresseur 6 comprimant le fluide frigorigène dans le circuit frigorigène 1 lorsque celui-ci se trouve à l'état gazeux. Dans le mode de réalisation avantageux illustré, le compresseur 6 peut être entraîné par un premier moteur électrique 63 muni d'un variateur électronique de vitesse 64 pour adapter sa vitesse à la puissance calorifique ou frigorifique demandée. Le compresseur 6 peut également être formé par deux compresseurs montés en parallèle. Avantageusement, le compresseur 6 est un compresseur 6 à vitesse de rotation ajustable de façon continue. Il est alors possible de réaliser un ajustement continu de la puissance calorifique ou frigorifique transférée à travers l'échangeur condenseur 2 ou l'échangeur évaporateur 3.

Le circuit frigorigène 1 comprend également un premier capteur de pression 61 configuré pour mesurer la pression PHP en sortie du compresseur 6 et un deuxième capteur de pression 62 configuré pour mesurer la pression PBP en entrée du compresseur 6.

Dans un mode de réalisation préférentiel, un réservoir 16 est monté dans le circuit frigorigène 1 à l'entrée du compresseur 6. Le réservoir 16 est configuré pour piéger le fluide frigorigène se trouvant à l'état liquide. Ainsi, le compresseur 6 est alimenté avec uniquement un fluide frigorigène à l'état gazeux.

Un premier détendeur 7 est monté dans le circuit frigorigène 1 de manière à abaisser la pression du fluide frigorigène lorsque celui-ci circule dans le détendeur 7 à l'état liquide. Le premier détendeur 7 est disposé dans une canalisation qui relie la sortie du premier échangeur de chaleur 2 avec l'entrée du deuxième échangeur de chaleur 3. Le premier détendeur 7 est préférentiellement contrôlé électroniquement.

Un deuxième détendeur 8, bidirectionnel, est monté dans le circuit frigorigène 1. Une première borne du détendeur 8 est reliée à une deuxième entrée/sortie du troisième échangeur de chaleur 4 et la deuxième borne du deuxième détendeur 8 est reliée à un troisième dispositif de commutation. Le détendeur 8 est configuré pour abaisser la pression du fluide frigorigène lorsque celui-ci circule dans le deuxième détendeur 8 à l'état liquide. Le deuxième détendeur 8 est préférentiellement contrôlé électroniquement.

Un troisième détendeur 9, bidirectionnel, est monté dans le circuit frigorigène 1. Une première borne du détendeur 9 est reliée à une deuxième entrée/sortie du quatrième échangeur de chaleur 5 et la deuxième borne du deuxième détendeur 9 est reliée à un troisième dispositif de commutation. Le détendeur 9 est configuré pour abaisser la pression du fluide frigorigène lorsque celui-ci circule dans le troisième détendeur 9 à l'état liquide. Le troisième détendeur 9 est préférentiellement contrôlé électroniquement.

Le circuit frigorigène possède différents nœuds de liaison qui connectent les différents éléments de la machine thermodynamique ensemble. Le circuit frigorigène 1 possède un premier nœud de liaison 17 qui relie la sortie du compresseur 6 avec l'entrée de l'échangeur condenseur 2, avec un premier dispositif de commutation et avec un deuxième dispositif de commutation.

Un deuxième nœud de liaison 18 réalise la connexion entre la sortie de l'échangeur condenseur 2, une première borne du premier détendeur 7 et un troisième dispositif de commutation.

Un troisième nœud de liaison 19 réalise la connexion entre une deuxième borne du premier détendeur 7, l'entrée de l'échangeur évaporateur 3 et le troisième dispositif de commutation.

Un quatrième nœud de liaison 20 réalise la connexion entre l'entrée du compresseur 6, la sortie de l'échangeur évaporateur 3, avec le premier dispositif de commutation et avec le deuxième dispositif de commutation. Le quatrième nœud de liaison 20 peut être disposé entre la sortie de l'échangeur évaporateur 3 et le réservoir 16.

Le premier dispositif de commutation est configuré pour définir sélectivement une première configuration ou une seconde configuration. La première configuration, illustrée aux figures 3 et, 5, relie le premier nœud de liaison 17 à la première entrée/sortie du troisième échangeur de chaleur 4 et empêche la circulation du fluide frigorigène à travers le premier dispositif de commutation avec le quatrième nœud de liaison 20. La deuxième configuration, illustrée aux figures 2 et 4, relie la première entrée/sortie du troisième échangeur de chaleur 4 au quatrième nœud de liaison 20 et empêche la circulation du fluide frigorigène à travers le premier dispositif de commutation avec le premier nœud de liaison 17.

Le premier dispositif de commutation peut être formé par exemple par deux vannes 10 et 11, de préférence des électrovannes. Dans la première configuration, la vanne 10 est ouverte et la vanne 11 est fermée. Dans la deuxième configuration, la vanne 10 est fermée et la vanne 11 est ouverte. Le premier dispositif de commutation définit ou comporte un cinquième nœud de liaison 21 qui relie le premier nœud de liaison 17, le quatrième nœud de liaison 20 et la première entrée/sortie du troisième échangeur de chaleur 4.

Le deuxième dispositif de commutation est configuré pour définir sélectivement une première configuration ou une seconde configuration. La première configuration, illustrée aux figures 3 et 4, relie le premier nœud de liaison 17 à la première entrée/sortie du quatrième échangeur de chaleur 5 et empêche la circulation du fluide frigorigène à travers le premier dispositif de commutation avec le quatrième nœud de liaison 20. La deuxième configuration, illustrée aux figures 2 et 5, relie la première entrée/sortie du quatrième échangeur de chaleur 5 au quatrième nœud de liaison 20 et empêche la circulation du fluide frigorigène à travers le premier dispositif de commutation avec le premier nœud de liaison 17.

Le deuxième dispositif de commutation peut être formé par exemple par deux vannes 12 et 13, de préférence des électrovannes. Dans la première configuration, la vanne 12 est ouverte et la vanne 13 est fermée. Dans la deuxième configuration, la vanne 12 est fermée et la vanne 13 est ouverte. Le deuxième dispositif de commutation définit ou comporte un sixième nœud de liaison 22 qui relie le premier nœud de liaison 17, le quatrième nœud de liaison 20 et la première entrée/sortie du quatrième échangeur de chaleur 5.

Le troisième dispositif de commutation est configuré pour définir sélectivement une première configuration, une seconde configuration, ou une troisième configuration. La première configuration, illustrée à la figure 2, relie le deuxième nœud de liaison 18 à la deuxième borne du deuxième détendeur 8 et à la deuxième borne du troisième détendeur 9 et empêche la circulation du fluide frigorigène avec le troisième nœud de liaison 19 à travers le troisième dispositif de commutation. La deuxième configuration, illustrée à la figure 3, relie le deuxième détendeur 8 et le troisième détendeur 9 au troisième nœud de liaison 19 et empêche la circulation du fluide frigorigène à travers le troisième dispositif de commutation avec le deuxième nœud de liaison 18. Le troisième dispositif de commutation est encore configuré pour définir une troisième configuration, de blocage, dans laquelle aucun fluide ne traverse le troisième dispositif de commutation entre le deuxième nœud de liaison 18 et le troisième nœud de liaison 19 (comme illustré aux figures 4 et 5). Le deuxième détendeur 8 est relié au troisième détendeur 9.

Le troisième dispositif de commutation peut être formé par deux vannes 14 et 15 montées en série entre le deuxième nœud de liaison 18 et le troisième nœud de liaison 19, de préférence des électrovannes. Dans la première configuration, la vanne 14 est ouverte et la vanne 15 fermée. Dans la deuxième configuration, la vanne 14 est fermée et la vanne 15 est ouverte. Dans la troisième configuration, les vannes 14 et 15 sont fermées.

Le troisième dispositif de commutation définit ou comporte un septième nœud de liaison 23 qui relie le deuxième nœud de liaison 18, le troisième nœud de liaison 19, la deuxième borne du deuxième détendeur 8, et la deuxième borne du troisième détendeur 9.

Comme illustré à la figure 2, les deuxièmes configurations des premier et deuxième dispositifs de commutation et la première configuration du troisième dispositif de commutation permettent de former un canal de circulation qui relie la sortie de l'échangeur condenseur 2 avec l'entrée du compresseur 6, en passant parallèlement à travers l'échangeur évaporateur 3, le troisième échangeur de chaleur 4 et le quatrième échangeur de chaleur 5 pour récupérer de la chaleur à la fois au consommateur de froid 300, à la source géothermique 400 et à la source aérothermique 500, et la délivrer au consommateur de chaleur 200.

Comme illustré à la figure 3, les premières configurations des premier et deuxième dispositifs de commutation et la deuxième configuration du troisième dispositif de commutation permettent de former un canal de circulation qui relie la sortie du compresseur 6 avec l'entrée de l'échangeur évaporateur 3, en passant parallèlement à travers l'échangeur condenseur 2, le troisième échangeur de chaleur 4 et le quatrième échangeur de chaleur 5 pour récupérer de la chaleur au consommateur de froid 300, et la délivrer à la fois au consommateur de chaleur 200, à la source géothermique 400 et à la source aérothermique 500.

Comme illustré à la figure 4, la deuxième configuration du premier dispositif de commutation, la première configuration du deuxième dispositif de commutation et la troisième configuration du troisième dispositif de commutation permettent de disposer le quatrième échangeur de chaleur 5 en série avec le troisième échangeur de chaleur 4 afin de puiser une énergie calorifique à la source géothermique 400 pour la délivrer à la source aérothermique 500.

Comme illustré à la figure 5, la première configuration du premier dispositif de commutation, la deuxième configuration du deuxième dispositif de commutation et la troisième configuration du troisième dispositif de commutation permettent de monter le troisième échangeur de chaleur 4 en série avec le quatrième échangeur de chaleur 5 entre la sortie et l'entrée du compresseur 6 afin de puiser une énergie calorifique à la source aérothermique 500 pour la délivrer à la source géothermique 400.

Un quatrième capteur de température 35 peut être utilisé pour mesurer la température T1 en sortie du circuit primaire de l'échangeur évaporateur 3.

Un cinquième capteur de température 45 peut être utilisé pour mesurer la température T2 du fluide frigorigène entre le nœud de liaison 21 et la première entrée/sortie de l'échangeur de chaleur 4. Par exemple, lorsque le primaire de l'échangeur de chaleur 4 fonctionne en évaporateur, le cinquième capteur de température 45 mesure la température T2 du fluide frigorigène en sortie du primaire de l'échangeur de chaleur 4.

Un sixième capteur de température 55 peut être utilisé pour mesurer la température T3 du fluide frigorigène entre le nœud de liaison 22 et la première entrée/sortie de l'échangeur de chaleur 5. Par exemple, lorsque le primaire de l'échangeur de chaleur 5 fonctionne en évaporateur, le sixième capteur de température 55 mesure la température T3 du fluide frigorigène en sortie du primaire de l'échangeur de chaleur 5.

Cette configuration est particulièrement avantageuse, car elle est compacte. Les premier, deuxième, troisième et quatrième nœuds de liaison peuvent être simplement des nœuds de raccordement et être dépourvus de vannes.

Selon les modes de réalisation, la machine thermodynamique 100 possède un seul circuit frigorigène, deux circuits frigorigènes ou plus de deux circuits frigorigènes.

La figure 2 illustre un mode de fonctionnement de la machine thermodynamique appelé production calorifique prioritaire. Dans ce mode de fonctionnement, la puissance calorifique produite par la machine thermodynamique 100 au travers du circuit frigorigène 1 est adaptée à la puissance calorifique requise par le consommateur de chaleur 200. Par exemple, le circuit de commande 600 régule la puissance calorifique produite en contrôlant la vitesse de rotation du compresseur 6. La puissance frigorifique produite par le circuit frigorigène 1 est au moins égale à la puissance frigorifique requise par le consommateur de froid 300.

La totalité de la puissance calorifique produite est transférée au consommateur de chaleur 200 au travers de l'échangeur condenseur 2. La flèche noire 203 représente une extraction de chaleur depuis le circuit frigorigène vers le consommateur de chaleur 200. Une partie de la puissance calorifique nécessaire à l'équilibre de la machine est puisée au consommateur de froid 300 au travers de l'échangeur évaporateur 3. La flèche noire 303 représente une extraction de chaleur depuis le consommateur de froid 300 vers le circuit frigorigène 1. Enfin, le complément de puissance calorifique nécessaire est puisé à la source géothermique 400 au travers de l'échangeur de chaleur 4 et/ou à la source aérothermique 500 au travers de l'échangeur de chaleur 5. La flèche noire 403 représente une extraction de chaleur depuis la source géothermique 400 vers le circuit frigorigène 1 et la flèche noire 503 représente une extraction de chaleur depuis la source aérothermique 500 vers le circuit frigorigène 1.

Dans le mode illustré à la figure 2, les premier et deuxième dispositifs de commutation sont dans leur deuxième configuration et le troisième dispositif de commutation est dans sa première configuration. La sortie du compresseur 6 est reliée à l'entrée de l'échangeur condenseur 2 qui est alimenté en fluide frigorigène à l'état gazeux et à haute pression. La sortie de l'échangeur condenseur 2 est reliée avec l'entrée du compresseur 6 en passant à travers trois branches parallèles, une première branche comportant le premier détendeur 7 et l'échangeur évaporateur 3, une deuxième branche comportant le deuxième détendeur 8 et le troisième échangeur thermique 4 et une troisième branche comportant le troisième détendeur 9 et le quatrième échangeur thermique 5. Les trois branches se séparent à la sortie de l'échangeur condenseur 2 au niveau du deuxième nœud de liaison 18, et se rejoignent à l'entrée du compresseur 6 au niveau du quatrième nœud de liaison 20.

Dans l'exemple particulier illustré à la figure 2, la vanne 10 est fermée et la vanne 11 est ouverte, la vanne 12 est fermée et la vanne 13 est ouverte, la vanne 14 est ouverte et la vanne 15 est fermée. Les vannes 10 et 12 étant fermées, la totalité du fluide frigorigène à l'état gazeux et à haute pression, en provenance du compresseur 6, circule uniquement à travers le primaire de l'échangeur condenseur 2, à l'intérieur duquel le fluide frigorigène se condense en cédant de la chaleur au fluide caloporteur circulant au circuit secondaire de l'échangeur condenseur 2. Le fluide frigorigène ressort de l'échangeur condenseur 2 à une température plus basse et avantageusement à l'état liquide et à haute pression et il traverse le deuxième nœud de liaison 18 où il se scinde en deux parties.

Une première partie du fluide frigorigène sortant du premier échangeur condenseur 2 est dirigée à travers le détendeur 7 vers l'entrée du deuxième échangeur évaporateur 3. Dans le détendeur 7, le fluide frigorigène subit un abaissement de sa pression. A la sortie du détendeur 7, le fluide est à basse pression et avantageusement à l'état liquide. Le fluide frigorigène est dirigé à travers le troisième nœud de liaison 19 vers le primaire de l'échangeur évaporateur 3 à l'intérieur duquel le fluide frigorigène s'évapore en captant de la chaleur depuis le fluide caloporteur circulant au circuit secondaire de l'échangeur évaporateur 3.

A la sortie du primaire de l'échangeur évaporateur 3, le fluide frigorigène est majoritairement à l'état gazeux et à basse pression. Le fluide frigorigène rejoint le réservoir 16 à travers le nœud de liaison 20.

L'autre partie du fluide frigorigène sortant de l'échangeur condenseur 2 est dirigée vers le troisième dispositif de commutation, la vanne 14 étant ouverte, où il se scinde à nouveau en deux parties au niveau du nœud de liaison 23. Une partie du fluide frigorigène est dirigée vers le troisième échangeur de chaleur 4 à travers le deuxième détendeur 8 et l'autre partie est dirigée vers le quatrième échangeur de chaleur 5 à travers le troisième détendeur 9.

Une partie du fluide frigorigène à l'état liquide traversant le troisième dispositif de commutation subit un abaissement de sa pression au moyen du détendeur 8. A la sortie du détendeur 8, le fluide à l'état liquide et à plus basse pression traverse le troisième échangeur thermique 4, fonctionnant en évaporateur. Le fluide frigorigène s'évapore dans le troisième échangeur de chaleur 4 en captant de la chaleur depuis le fluide caloporteur circulant au circuit secondaire de l'échangeur 4. A sa sortie de l'échangeur 4, le fluide frigorigène majoritairement à l'état gazeux et à basse pression rejoint le réservoir 16 à travers la vanne 11 ouverte et le nœud de liaison 20.

L'autre partie du fluide frigorigène à l'état liquide traversant le troisième dispositif de commutation subit un abaissement de sa pression au moyen du détendeur 9. A la sortie du détendeur 9, le fluide à l'état liquide et à plus basse pression traverse le quatrième échangeur thermique 5, fonctionnant en évaporateur. Le fluide frigorigène s'évapore dans le quatrième échangeur de chaleur 5 en captant de la chaleur depuis l'air ambiant circulant au circuit secondaire de l'échangeur 5. A sa sortie de l'échangeur 5, le fluide frigorigène majoritairement à l'état gazeux et à basse pression rejoint le réservoir 16 à travers la vanne 13 ouverte et le nœud de liaison 20. De manière avantageuse, la mesure combinée des températures T1, T2 et T3 est utilisée pour déterminer la valeur de surchauffe du fluide frigorigène respectivement à la sortie de l'échangeur 3, à la sortie de l'échangeur 4, et à la sortie de l'échangeur 5. Dans un mode de réalisation privilégié, la mesure des températures T1, T2 et T3 est utilisée afin d'imposer la valeur de surchauffe du fluide frigorigène en sortie de l'échangeur 3, en sortie de l'échangeur 4 et en sortie l'échangeur 5.

Avantageusement, la mesure combinée des températures T1, T2 et T3 est utilisée pour commander le taux d'ouverture du détendeur 7, le taux d'ouverture du détendeur 8 et le taux d'ouverture du détendeur 9. La mesure des températures est utilisée pour assurer l'évaporation complète du fluide frigorigène à la fois dans l'échangeur 3, dans l'échangeur 4 et dans l'échangeur 5. De manière particulièrement avantageuse, la mesure des températures est associée à une mesure de la pression PBP pour mieux contrôler la valeur de la surchauffe.

Il est avantageux de contrôler le taux d'ouverture du détendeur 7 par rapport aux taux d'ouverture des détendeurs 8 et 9 afin de réguler la proportion de fluide traversant l'échangeur évaporateur 3 par rapport à la proportion de fluide traversant les troisième et quatrième échangeurs thermique 4 et 5. Le contrôle de la proportion de fluide traversant le primaire de l'échangeur évaporateur 3 permet d'ajuster de façon continue la puissance frigorifique transmise à travers l'échangeur évaporateur 3 afin d'adapter cette puissance à la puissance frigorifique requise par le consommateur de froid 300. Le complément de puissance calorifique nécessaire à l'équilibre énergétique de la machine est capté par le troisième échangeur de chaleur 4 et/ou le quatrième échangeur de chaleur 5.

Ainsi la thermofrigopompe 100, en mode production calorifique prioritaire, permet d'ajuster les puissances calorifique et frigorifique transmises respectivement à travers l'échangeur condenseur 2 et l'échangeur évaporateur 3, et de puiser le complément de puissance calorifique à la source géothermique 400 et/ou à la source aérothermique 500.

Le contrôle des proportions relatives de fluide frigorigène traversant les deux échangeurs thermiques 4 et 5 permet d'ajuster d'une part la puissance calorifique prélevée à la source géothermique 400 à travers le troisième échangeur 4 et d'autre part la puissance calorifique prélevée à la source aérothermique 500 à travers le quatrième échangeur 5. Dans ce premier mode de fonctionnement, la machine thermodynamique 100 peut ainsi contrôler les parts de puissance calorifique fournies respectivement par la source géothermique 400 et par la source aérothermique 500.

De manière avantageuse, la mesure combinée des températures TGEO et TAIR est utilisée pour déterminer à chaque instant laquelle des deux sources externes 400 et 500 est la plus favorable pour assurer le niveau de performance énergétique maximal. Ainsi, en comparant les deux températures mesurées TGEO et TAIR, le circuit de commande 600 peut être configuré pour fermer totalement l'un ou l'autre des deux détendeurs 9 et 8 et ainsi sélectionner l'une ou l'autre des deux sources externes 400 et 500, plaçant ainsi la machine thermodynamique 100 dans un mode de fonctionnement de type production calorifique prioritaire, dans lequel le complément d'énergie calorifique est fourni par la source externe la plus favorable. La comparaison entre TGEO et TAIR permet de déterminer quelle température parmi l'air ambiant et la source géothermique est la plus proche de la température requise pour la charge calorifique 200. Le circuit de commande 600 sélectionne alors l'échangeur de chaleur associé à la source thermique ayant la température la plus proche de la température recherchée.

De manière avantageuse, lorsque la thermofrigopompe 100 est en mode production calorifique prioritaire, lorsque la température TGEO de la source géothermique est supérieure à la température TAIR de l'air ambiant, le circuit de commande 600 peut fermer totalement le détendeur 9 associé à l'échangeur de chaleur 5 afin d'exploiter uniquement l'énergie calorifique de la source géothermique 400. Inversement lorsque la température TGEO de la source géothermique est inférieure à la température TAIR de l'air ambiant, le circuit de commande 600 peut fermer totalement le détendeur 8 associé à l'échangeur de chaleur 4 afin d'exploiter uniquement l'énergie calorifique de la source aérothermique 500.

En mode production calorifique prioritaire, la thermofrigopompe 100 peut ainsi ajuster à chaque instant les puissances calorifique et frigorifique transmises respectivement à travers l'échangeur condenseur 2 et l'échangeur évaporateur 3, tout en puisant le complément de puissance calorifique à la source la plus favorable, entre la source géothermique 400 et la source aérothermique 500, pour assurer le niveau de performance énergétique maximal de la machine.

La figure 3 illustre un mode de fonctionnement de la machine thermodynamique appelé production frigorifique prioritaire. Dans ce mode de fonctionnement, la puissance frigorifique produite par la machine thermodynamique 100 au travers du circuit frigorigène 1 est adaptée à la puissance frigorifique requise par le consommateur de froid 300. Par exemple, le circuit de commande 600 régule la puissance frigorifique produite en contrôlant la vitesse de rotation du compresseur 6. La puissance calorifique produite par le circuit frigorigène 1 est au moins égale à la puissance calorifique requise par le consommateur de chaleur 200.

La totalité de la puissance frigorifique produite est transférée au consommateur de froid 300 au travers de l'échangeur évaporateur 3. La flèche noire 303 représente une extraction de chaleur depuis le consommateur de froid 300 vers le circuit frigorigène. Une partie de la puissance calorifique produite est transférée au consommateur de chaleur 200 au travers de l'échangeur condenseur 2. La flèche noire 203 représente une extraction de chaleur depuis le circuit frigorigène 1 vers le consommateur de chaleur 200. La partie restante de la puissance calorifique produite par la machine est transférée à la source géothermique 400 au travers de l'échangeur de chaleur 4 et/ou à la source aérothermique 500 au travers de l'échangeur de chaleur 5. La flèche noire 403 représente une extraction de chaleur depuis le circuit frigorigène 1 vers la source géothermique 400 et la flèche noire 503 représente une extraction de chaleur depuis le circuit frigorigène 1 vers la source aérothermique 500.

Dans le mode illustré à la figure 3, les premier et deuxième dispositifs de commutation sont dans leur première configuration et le troisième dispositif de commutation est dans sa deuxième configuration. La sortie du compresseur 6 est reliée à l'entrée du deuxième échangeur évaporateur 3 en passant à travers trois branches parallèles, une première branche comportant le premier échangeur condenseur 2 et le premier détendeur 7, une deuxième branche comportant le troisième échangeur thermique 4 et le deuxième détendeur 8 et une troisième branche comportant le quatrième échangeur thermique 5 et le troisième détendeur 9. Les trois branches se séparent à la sortie du compresseur 6 au niveau du premier nœud de liaison 17, et se rejoignent à l'entrée de l'échangeur évaporateur 3, au niveau du troisième nœud de liaison 19. La sortie de l'échangeur évaporateur 3 est reliée à l'entrée du compresseur 6.

Dans l'exemple particulier illustré à la figure 3, la vanne 10 est ouverte et la vanne 11 est fermée, la vanne 12 est ouverte et la vanne 13 est fermée, la vanne 14 est fermée et la vanne 15 est ouverte. A la sortie du compresseur 6, le fluide frigorigène est à l'état gazeux et à haute pression et il traverse le premier nœud de liaison 17 où il se scinde en trois parties. Une première partie du fluide frigorigène est dirigée vers le primaire de l'échangeur condenseur 2, à l'intérieur duquel le fluide frigorigène se condense en cédant de la chaleur au fluide caloporteur circulant au circuit secondaire de l'échangeur condenseur 2. Le fluide frigorigène ressort de l'échangeur condenseur 2 à une température plus basse et à l'état liquide et à haute pression. Le fluide frigorigène sortant du premier échangeur condenseur 2 est dirigé à travers le détendeur 7 vers l'entrée du deuxième échangeur évaporateur 3. Dans le détendeur 7, le fluide frigorigène subit un abaissement de sa pression. A la sortie du détendeur 7, le fluide à basse pression et avantageusement à l'état liquide est dirigé vers le troisième nœud de liaison 19.

Une seconde partie du fluide frigorigène en sortie du compresseur 6 est dirigée à travers la vanne 10 ouverte vers le troisième échangeur thermique 4, fonctionnant en condenseur, à l'intérieur duquel le fluide frigorigène se condense en cédant de la chaleur au fluide caloporteur circulant au circuit secondaire de l'échangeur de chaleur 4. A sa sortie de l'échangeur 4, le fluide frigorigène à une température plus basse et à l'état liquide et à haute pression est dirigé à travers le détendeur 8 dans lequel le fluide frigorigène subit un abaissement de sa pression. A la sortie du détendeur 8, le fluide à basse pression et avantageusement à l'état liquide est dirigé vers le troisième nœud de liaison 19 à travers la vanne 15 ouverte.

Une troisième partie du fluide frigorigène en sortie du compresseur 6 est dirigée à travers la vanne 12 ouverte vers le quatrième échangeur thermique 5, fonctionnant en condenseur, à l'intérieur duquel le fluide frigorigène se condense en cédant de la chaleur à l'air ambiant circulant au circuit secondaire de l'échangeur de chaleur 5. A sa sortie de l'échangeur 5, le fluide frigorigène à une température plus basse et à l'état liquide et à haute pression est dirigé à travers le détendeur 9 dans lequel le fluide frigorigène subit un abaissement de sa pression. A la sortie du détendeur 9, le fluide à basse pression et avantageusement à l'état liquide rejoint la partie du fluide frigorigène en provenance de l'échangeur 4 au niveau du nœud de liaison 23, puis est dirigé vers le troisième nœud de liaison 19 à travers la vanne 15 ouverte.

Au niveau du troisième nœud de liaison 19, la partie de fluide frigorigène en provenance de l'échangeur condenseur 2 et du détendeur 7, la partie de fluide frigorigène en provenance de l'échangeur thermique 4 et du détendeur 8, et la partie de fluide frigorigène en provenance de l'échangeur thermique 5 et du détendeur 9, se mélangent avant d'entrer dans le primaire de l'échangeur évaporateur 3. La totalité du fluide frigorigène, à l'état liquide et à basse pression, circule à travers le primaire de l'échangeur évaporateur 3, à l'intérieur duquel le fluide frigorigène s'évapore en captant de la chaleur au fluide caloporteur circulant au circuit secondaire de l'échangeur évaporateur 3.

A la sortie du primaire de l'échangeur évaporateur 3, le fluide frigorigène est majoritairement à l'état gazeux et à basse pression. Le fluide frigorigène rejoint l'entrée du compresseur à travers le nœud de liaison 20 et le réservoir 16.

De manière avantageuse, la mesure de la température T1 est utilisée pour déterminer la valeur de surchauffe du fluide frigorigène à la sortie de l'échangeur évaporateur 3. Dans un mode de réalisation privilégié, la mesure de la température T1 est utilisée afin d'imposer la valeur de surchauffe du fluide frigorigène en sortie de l'échangeur 3.

Avantageusement, la mesure de la température T1 est utilisée pour commander le taux d'ouverture du détendeur 7, le taux d'ouverture du détendeur 8 et le taux d'ouverture du détendeur 9. La mesure de la température est utilisée pour assurer l'évaporation complète du fluide frigorigène dans l'échangeur 3. De manière particulièrement avantageuse, la mesure de température est associée à une mesure de la pression PBP pour mieux contrôler la valeur de la surchauffe.

Il est avantageux de contrôler le taux d'ouverture du détendeur 7 par rapport aux taux d'ouverture des détendeurs 8 et 9 afin de réguler la proportion de fluide traversant le premier échangeur condenseur 2 par rapport à la proportion de fluide traversant les troisième et quatrième échangeurs thermique 4 et 5. Le contrôle de la proportion de fluide traversant le primaire de l'échangeur condenseur 2 permet d'ajuster de façon continue la puissance calorifique transmise à travers l'échangeur condenseur 2 afin d'adapter cette puissance à la puissance calorifique requise par le consommateur de chaleur 200. Le surplus de puissance calorifique produite par la machine et non transférée au consommateur de chaleur 200 est évacué par le troisième échangeur de chaleur 4 et/ou le quatrième échangeur de chaleur 5.

Ainsi la thermofrigopompe 100, en mode production frigorifique prioritaire, permet d'ajuster les puissances calorifique et frigorifique transmises respectivement à travers l'échangeur condenseur 2 et l'échangeur évaporateur 3, et de puiser le complément d'énergie frigorifique nécessaire à l'équilibre énergétique de la machine à la source géothermique 400 et/ou à la source aérothermique 500.

Le contrôle des proportions relatives de fluide frigorigène traversant les deux échangeurs thermiques 4 et 5 permet d'ajuster d'une part la puissance calorifique transférée à la source géothermique 400 à travers le troisième échangeur 4 et d'autre part la puissance calorifique transférée à la source aérothermique 500 à travers le quatrième échangeur 5. Dans ce deuxième mode de fonctionnement, la machine thermodynamique 100 peut ainsi contrôler les parts de puissance frigorifique fournies respectivement par la source géothermique 400 et par la source aérothermique 500.

De manière avantageuse, la mesure combinée des températures TGEO et TAIR est utilisée pour déterminer à chaque instant laquelle des deux sources externes 400 et 500 est la plus favorable pour assurer le niveau de performance énergétique maximal. Ainsi, en comparant les deux températures mesurées TGEO et TAIR, le circuit de commande 600 peut être configuré pour fermer totalement l'un ou l'autre des deux détendeurs 9 et 8 et ainsi sélectionner l'une ou l'autre des deux sources externes 400 et 500, plaçant ainsi la machine thermodynamique 100 dans un mode de fonctionnement de type production frigorifique prioritaire, dans lequel le complément d'énergie frigorifique nécessaire est fourni par la source externe la plus favorable. La comparaison entre TGEO et TAIR permet de déterminer quelle température parmi l'air ambiant et la source géothermique est la plus proche de la température requise pour la charge frigorifique 300. Le circuit de commande 600 sélectionne alors l'échangeur de chaleur associé à la source thermique ayant la température la plus proche de la température recherchée.

De manière avantageuse, lorsque la thermofrigopompe 100 est en mode production frigorifique prioritaire, lorsque la température TGEO de la source géothermique est inférieure à la température TAIR de l'air ambiant, le circuit de commande 600 peut fermer totalement le détendeur 9 associé à l'échangeur de chaleur 5 afin d'exploiter uniquement l'énergie frigorifique de la source géothermique 400. Inversement lorsque la température TGEO de la source géothermique est supérieure à la température TAIR de l'air ambiant, le circuit de commande 600 peut fermer totalement le détendeur 8 associé à l'échangeur de chaleur 4 afin d'exploiter uniquement l'énergie frigorifique de la source aérothermique 500.

En mode production frigorifique prioritaire, la thermofrigopompe 100 peut ainsi ajuster à chaque instant les puissances calorifique et frigorifique transmises respectivement à travers l'échangeur condenseur 2 et l'échangeur évaporateur 3, tout en exploitant l'énergie frigorifique de la source la plus favorable, entre la source géothermique 400 et la source aérothermique 500, pour assurer le niveau de performance énergétique maximal de la machine.

La machine thermodynamique 100 peut également réaliser la décharge de la source géothermique comme illustré à la figure 4. Le premier dispositif de commutation est dans sa deuxième configuration, le deuxième dispositif de commutation est dans sa première configuration et le troisième dispositif de commutation est dans sa troisième configuration. Le détendeur 7 est fermé. La sortie du compresseur 6 est connectée à l'entrée du compresseur 6 de sorte que le fluide frigorigène passe successivement à travers le quatrième échangeur thermique 5, qui fonctionne en condenseur, puis à travers le troisième échangeur thermique 4 qui fonctionne en évaporateur de fluide frigorigène. Les calories extraites depuis la source géothermique 400 sont évacuées vers la source aérothermique 500. Ainsi, il est possible de décharger en énergie calorifique la source géothermique 400 vers la source aérothermique 500, c'est-à-dire d'évacuer des calories hors de la source géothermique 400. La flèche 503 représente une fourniture de chaleur depuis le circuit frigorigène 1 vers la source aérothermique 500. La flèche 403 représente une extraction de chaleur depuis la source géothermique 400 vers le circuit frigorigène 1.

La vanne 10 et le détendeur 7 étant fermés, la totalité du fluide frigorigène à l'état gazeux et à haute pression sortant du compresseur 6 est orientée, à travers la vanne 12 ouverte, vers le quatrième échangeur thermique 5, où le fluide frigorigène se condense en cédant de la chaleur à l'air circulant dans le circuit secondaire du quatrième échangeur 5. Le fluide frigorigène ressort du primaire du quatrième échangeur 5 à une température plus basse et avantageusement à l'état liquide et à haute pression.

A la sortie du quatrième échangeur thermique 5, le fluide frigorigène traverse le détendeur 9 et subit un abaissement de sa pression. A la sortie du détendeur 9, le fluide est à basse pression et avantageusement à l'état liquide. Le fluide frigorigène est dirigé, à travers le nœud de liaison 23 et le détendeur 8 totalement ouvert, vers le troisième échangeur thermique 4 où le fluide frigorigène s'évapore en captant de la chaleur depuis le fluide caloporteur circulant au circuit secondaire de l'échangeur 4.

A la sortie du primaire du troisième échangeur 4, le fluide frigorigène est majoritairement à l'état gazeux et à basse pression, et rejoint le réservoir 16 à travers la vanne 11 ouverte et le nœud de liaison 20.

De manière avantageuse, la mesure de la température T2 est utilisée pour déterminer la valeur de surchauffe du fluide frigorigène à la sortie de l'échangeur 4. Préférentiellement, la mesure de la température T2 est utilisée afin d'imposer la valeur de surchauffe du fluide frigorigène en sortie du troisième échangeur 4.

Avantageusement, la mesure de la température T2 est utilisée pour commander le taux d'ouverture du détendeur 9. La mesure de la température T2 est utilisée pour assurer l'évaporation complète du fluide frigorigène dans le primaire de l'échangeur 4. De manière particulièrement avantageuse, la mesure de la température T2 est associée à une mesure de la pression PBP pour mieux contrôler la valeur de la surchauffe.

De manière avantageuse, la mesure combinée des températures de l'air ambiant et de la ressource géothermique est utilisée pour déterminer à quel moment une phase de décharge de la source géothermique 400 peut être activée. Ainsi la décharge calorifique depuis la source géothermique 400 vers la source aérothermique 500 peut être activée lorsque la température de l'air TAIR est inférieure à la température du sous-sol au niveau de la source géothermique 400.

La figure 5 illustre un mode de fonctionnement qui assure la charge de la source géothermique 400. La machine thermodynamique permet de puiser de l'énergie calorifique depuis la source aérothermique 500 et d'introduire ces calories dans la source géothermique 400.

Le premier dispositif de commutation est dans sa première configuration, le deuxième dispositif de commutation est dans sa deuxième configuration et le troisième dispositif de commutation est dans sa troisième configuration. Le détendeur 7 est fermé.

Les premier, deuxième et troisième dispositifs de commutation relient la sortie du compresseur 6 avec l'entrée du compresseur 6 de sorte que le fluide frigorigène passe successivement à travers le troisième échangeur thermique 4, qui fonctionne alors en condenseur, puis à travers le quatrième échangeur thermique 5, qui fonctionne en évaporateur. La chaleur est récupérée depuis la source aérothermique 500 et elle est évacuée vers la source géothermique 400. Ainsi, il est possible de recharger en énergie calorifique la source géothermique 400 depuis la source aérothermique 500. La flèche 403 représente une fourniture de chaleur depuis le circuit frigorigène 1 vers la source géothermique 400. La flèche 503 représente une extraction de chaleur depuis la source aérothermique 500 vers le circuit frigorigène 1.

La vanne 12 et le détendeur 7 étant fermés, le fluide frigorigène, en phase vapeur et à haute pression, en sortie du compresseur 6, est dirigé à travers la vanne 10 vers le troisième échangeur thermique 4, où il se condense en cédant de la chaleur au fluide caloporteur circulant au circuit secondaire du troisième échangeur thermique 4. Le fluide frigorigène ressort du troisième échangeur 4 à une température plus basse et avantageusement à l'état liquide et à haute pression. A la sortie du troisième échangeur thermique 4, le fluide frigorigène traverse le détendeur 8, dans lequel le fluide frigorigène subit un abaissement de sa pression. A la sortie du détendeur 8, le fluide est à basse pression et avantageusement à l'état liquide. Le fluide frigorigène est dirigé à travers le nœud de liaison 23 et le détendeur 9 totalement ouvert, vers le quatrième échangeur thermique 5 où le fluide frigorigène s'évapore en captant de la chaleur à l'air circulant au circuit secondaire du quatrième échangeur 5.

A la sortie du primaire du quatrième échangeur 5, le fluide frigorigène est majoritairement à l'état gazeux et à basse pression, et rejoint le réservoir 16 à travers la vanne 13 ouverte.

De manière avantageuse, la mesure de la température T3 est utilisée pour déterminer la valeur de surchauffe du fluide frigorigène à la sortie de l'échangeur 5. Dans un mode de réalisation privilégié, la mesure de la température T3 est utilisée afin d'imposer la valeur de surchauffe du fluide frigorigène en sortie de l'échangeur 5.

Avantageusement, la mesure de la température T3 est utilisée pour commander le taux d'ouverture du détendeur 8. La mesure de la température T3 est utilisée pour assurer l'évaporation complète du fluide frigorigène dans le primaire de l'échangeur 5. De manière particulièrement avantageuse, la mesure de la température T3 est associée à une mesure de la pression PBP pour mieux contrôler la valeur de la surchauffe.

De manière avantageuse, la mesure combinée des températures de l'air ambiant et de la ressource géothermique est utilisée pour déterminer à quel moment une phase de recharge de la source géothermique 400 peut être activée. Ainsi la recharge calorifique de la source géothermique 400 depuis la source aérothermique 500 peut être activée lorsque la température de l'air TAIR est supérieure à la température du sous-sol au niveau de la source géothermique 400.

La configuration illustrée aux figures 1 à 5 est particulièrement avantageuse, car elle est compacte. Les premier, deuxième, troisième et quatrième nœuds de liaison peuvent être simplement des nœuds de raccordement et être dépourvus de vannes. Les dispositifs de commutation peuvent être formés par une ou plusieurs vannes. Une telle machine permet de réaliser simplement une production simultanée d'énergie calorifique et d'énergie frigorifique à destination respectivement d'une charge calorifique 200 et d'une charge frigorifique 300 en utilisant une ou plusieurs sources externes. Une telle machine permet également de gérer l'évolution de la température de la source géothermique en réalisant des phases de charge et de décharge depuis la source aérothermique. Dans les modes de réalisation précédents un seul circuit frigorigène est illustré et utilisé pour obtenir les multiples modes de fonctionnement décrits. Il est possible d'avoir une machine thermodynamique 100 qui possède deux circuits frigorigènes ou plus de deux circuits frigorigènes. La figure 6 représente schématiquement un autre mode de réalisation d'une machine thermodynamique 100 comportant deux circuits frigorigènes distincts 1 et 101. Chaque circuit frigorigène 1/101 alimente un primaire des multiples échangeurs de chaleur. Le premier circuit frigorigène 1 est identique à celui décrit précédemment en relation avec les modes de réalisation illustrés aux figures 1 à 5 dans sa configuration et dans ses éléments constitutifs.

Le deuxième circuit frigorigène 101 relie les primaires des multiples échangeurs de chaleur afin de pouvoir assurer le transfert des calories.

Les deux circuits frigorigènes 1/101 sont avantageusement identiques et comportent chacun un compresseur 6/106 préférentiellement disposé dans la canalisation qui relie l'échangeur évaporateur 3 avec l'échangeur condenseur 2. Chaque circuit frigorigène 1 et 101 comporte également trois détendeurs 7, 8, 9 et 107, 108, 109. Les caractéristiques techniques des éléments formant le deuxième circuit frigorigène peuvent reprendre les caractéristiques déjà indiquées plus haut pour le premier circuit frigorigène. Le deuxième circuit frigorigène comporte quatre nœuds de liaison 117, 118, 119, 120, disposés de manière identique à ce qui a été décrit précédemment et il comporte également les trois dispositifs de commutation. Le deuxième circuit frigorigène peut également comporter un réservoir 116, ainsi que des capteurs de température. Chaque capteur de température du deuxième circuit frigorigène étant un capteur équivalent à ce qui a été décrit dans le premier circuit frigorigène.

Le circuit frigorigène 101 comprend avantageusement un capteur de pression 161 configuré pour mesurer la pression PHP101 en sortie du compresseur 106. Le circuit frigorigène 101 peut également comporter un autre capteur de pression 162 configuré pour mesurer la pression PBP101 en entrée du compresseur 106. Tous ces capteurs sont connectés au circuit de commande 600.

Le second circuit frigorigène 101 permet la circulation d'un second fluide frigorigène qui peut être identique ou différent au premier fluide frigorigène dans sa composition.

Le second circuit frigorigène 101 comporte un premier capteur de température du fluide frigorigène 135 configuré pour mesurer la température T101 en sortie du second circuit primaire du deuxième échangeur évaporateur 2. Le second circuit frigorigène 101 comporte un deuxième capteur de température du fluide frigorigène 145 configuré pour mesurer la température T102 du fluide frigorigène en sortie du second circuit primaire du troisième échangeur 4 lorsque celui-ci fonctionne en évaporateur. Le second circuit frigorigène 101 comporte un troisième capteur de température du fluide frigorigène 155, configuré pour mesurer la température T103 du fluide frigorigène en sortie du second circuit primaire du quatrième échangeur 5 lorsque celui-ci fonctionne en évaporateur.

La machine thermodynamique 100 à deux circuits frigorigènes peut fonctionner selon les mêmes modes de production que ceux illustrés aux figures 2, 3, 4 et 5. Dans ces cas de figure, les états des premier, deuxième et troisième dispositifs de commutation des deux circuits sont identiques. Ainsi, les schémas des deux circuits frigorigènes sont identiques. Les deux fluides frigorigènes circulent de manière identique dans les deux circuits. Le fonctionnement général de la machine thermodynamique est identique à ce qui a été présenté plus haut. Le premier dispositif de commutation du deuxième circuit frigorigène 101 est équivalent au premier dispositif de commutation du premier circuit frigorigène 1. Le deuxième dispositif de commutation du deuxième circuit frigorigène 101 est équivalent au deuxième dispositif de commutation du premier circuit frigorigène 1. Le troisième dispositif de commutation du deuxième circuit frigorigène 101 est équivalent au troisième dispositif de commutation du premier circuit frigorigène 1.

Il est avantageux de prévoir que les deux circuits frigorigènes 1 et 101 fonctionnent de manières différentes. Chacun des deux circuits frigorigènes 1 et 101 peut fonctionner indépendamment selon l'un ou l'autre des quatre modes de fonctionnement que sont le mode production calorifique prioritaire, le mode production frigorifique prioritaire, le mode décharge de la source géothermique, le mode recharge de la source géothermique. Les figures 7, 8, 9 et 10 illustrent quatre configurations dans lesquelles les deux circuits frigorigènes 1 et 101 fonctionnent différemment.

La figure 7 illustre une première configuration des circuits frigorigènes 1 et 101. Dans cette première configuration, la machine 100 fonctionne globalement selon le mode appelé production calorifique prioritaire, tout en réalisant la décharge de la source géothermique. La machine 100 fournit de l'énergie calorifique au consommateur de chaud 200, fournit de l'énergie frigorifique au consommateur de froid 300 et puise le complément d'énergie calorifique à la source géothermique 400, tout en effectuant simultanément une décharge de la source géothermique 400 vers la source aérothermique 500.

Le premier circuit frigorigène 1 fonctionne selon le mode de production calorifique prioritaire dans le cas particulier où seule la source géothermique 400 est exploitée tel qu'il a été expliqué et illustré à la figure 2 pour un seul circuit frigorigène, dans le cas particulier où le détendeur 9 est fermé. Le deuxième circuit frigorigène 101 fonctionne selon le mode de décharge de la source géothermique. Ce mode de fonctionnement du deuxième circuit frigorigène 101 est identique au mode de fonctionnement de la machine thermodynamique 100 à un seul circuit frigorigène, qui est illustré à la figure 4.

Dans le premier circuit frigorigène 1, les premier et deuxième dispositifs de commutation sont placés dans leur deuxième configuration, le troisième dispositif de commutation est placé dans sa première configuration, et le détendeur 9 est fermé.

Dans le deuxième circuit frigorigène 101, le premier dispositif de commutation est placé dans sa deuxième configuration, le deuxième dispositif de commutation est placé dans sa première configuration, le troisième dispositif de commutation est placé dans sa troisième configuration et le détendeur 107 est fermé.

De manière avantageuse, cette configuration est mise en œuvre par le dispositif de contrôle 600 selon les mêmes critères que pour le mode de décharge de la source géothermique 400 de la machine à un seul circuit frigorigène, c'est-à-dire lorsque la température de l'air mesurée TAIR est inférieure à la température du sous-sol au niveau de la source géothermique 400.

La figure 8 illustre une deuxième configuration où la machine fonctionne globalement selon le mode appelé production calorifique prioritaire, tout en réalisant la recharge de la source géothermique. La machine 100 fournit de l'énergie calorifique au consommateur de chaud 200, fournit de l'énergie frigorifique au consommateur de froid 300 et puise le complément d'énergie calorifique à la source aérothermique 500, tout en effectuant simultanément une recharge de la source géothermique 400 depuis la source aérothermique 500.

Le premier circuit frigorigène 1 fonctionne selon le mode de production calorifique prioritaire dans le cas particulier où seule la source aérothermique 500 est exploitée tel qu'il a été expliqué et illustré à la figure 2 pour un seul circuit frigorigène, dans le cas particulier où le détendeur 8 est fermé.

Le deuxième circuit frigorigène 101 fonctionne selon le mode de recharge de la source géothermique, c'est-à-dire de manière identique au mode de fonctionnement de la thermofrigopompe 100 à un seul circuit frigorigène, qui est illustré à la figure 5.

Dans le premier circuit frigorigène 1, les premier et deuxième dispositifs de commutation sont placés dans leur deuxième configuration, le troisième dispositif de commutation est placé dans sa première configuration, et le détendeur 8 est fermé.

Dans le deuxième circuit frigorigène 101, le premier dispositif de commutation est placé dans sa première configuration, le deuxième dispositif de commutation est placé dans sa deuxième configuration, le troisième dispositif de commutation est placé dans sa troisième configuration et le détendeur 107 est fermé.

Cette combinaison pourra être activée par le dispositif de contrôle 600 selon les mêmes critères que pour le mode de recharge de la source géothermique 400 de la machine à un seul circuit frigorigène, c'est-à-dire lorsque la température de l'air mesurée TAIR est supérieure à la température du sous-sol au niveau de la source géothermique 400.

La figure 9 illustre une troisième configuration où la machine fonctionne globalement selon le mode appelé production frigorifique prioritaire, tout en réalisant la recharge de la source géothermique. La machine 100 fournit de l'énergie calorifique au consommateur de chaud 200, fournit de l'énergie frigorifique au consommateur de froid 300 et transfère une partie de l'énergie calorifique produite vers la source géothermique 400, tout en effectuant simultanément une recharge de la source géothermique 400 depuis la source aérothermique 500.

Le premier circuit frigorigène 1 fonctionne selon le mode de production frigorifique prioritaire dans le cas particulier où seule la source géothermique 400 est exploitée tel qu'il a été expliqué et illustré à la figure 3 pour un seul circuit frigorigène, dans le cas particulier où le détendeur 9 est fermé.

Le deuxième circuit frigorigène 101 fonctionne selon le mode de recharge de la source géothermique, c'est-à-dire de manière identique au mode de fonctionnement de la thermofrigopompe 100 à un seul circuit frigorigène, qui est illustré à la figure 5.

Dans le premier circuit frigorigène 1, les premier et deuxième dispositifs de commutation sont placés dans leur première configuration, le troisième dispositif de commutation est placé dans sa deuxième configuration, et le détendeur 9 est fermé.

Dans le deuxième circuit frigorigène 101, le premier dispositif de commutation est placé dans sa première configuration, le deuxième dispositif de commutation est placé dans sa deuxième configuration, le troisième dispositif de commutation est placé dans sa troisième configuration et le détendeur 107 est fermé.

Cette combinaison pourra être activée par le dispositif de contrôle 600 selon les mêmes critères que pour le mode de recharge de la source géothermique 400 de la machine à un seul circuit frigorigène, c'est-à-dire lorsque la température de l'air mesurée TAIR est supérieure à la température du sous-sol au niveau de la source géothermique 400.

La figure 10 illustre une quatrième configuration où la machine fonctionne globalement selon le mode appelé production frigorifique prioritaire, tout en réalisant la décharge de la source géothermique. La machine 100 fournit de l'énergie calorifique au consommateur de chaud 200, fournit de l'énergie frigorifique au consommateur de froid 300 et transfère une partie de l'énergie calorifique produite vers la source aérothermique 500, tout en effectuant simultanément une décharge de la source géothermique 400 vers la source aérothermique 500.

Le premier circuit frigorigène 1 fonctionne selon le mode de production frigorifique prioritaire dans le cas particulier où seule la source aérothermique 500 est exploitée tel qu'il a été expliqué et illustré à la figure 3 pour un seul circuit frigorigène, dans le cas particulier où le détendeur 8 est fermé.

Le deuxième circuit frigorigène 101 fonctionne selon le mode de décharge de la source géothermique, c'est-à-dire de manière identique au mode de fonctionnement de la thermofrigopompe 100 à un seul circuit frigorigène, qui est illustré à la figure 4.

Dans le premier circuit frigorigène 1, les premier et deuxième dispositifs de commutation sont placés dans leur première configuration, le troisième dispositif de commutation est placé dans sa deuxième configuration, et le détendeur 8 est fermé.

Dans le deuxième circuit frigorigène 101, le premier dispositif de commutation est placé dans sa deuxième configuration, le deuxième dispositif de commutation est placé dans sa première configuration, le troisième dispositif de commutation est placé dans sa troisième configuration et le détendeur 107 est fermé.

Cette combinaison pourra être activée par le dispositif de contrôle 600 selon les mêmes critères que pour le mode de décharge de la source géothermique 400 de la machine à un seul circuit frigorigène, c'est-à-dire lorsque la température de l'air mesurée TAIR est inférieure à la température du sous-sol au niveau de la source géothermique 400.

La machine thermodynamique 100 permet de fournir simultanément de l'énergie calorifique à une charge calorifique 200 et de l'énergie frigorifique à une charge frigorifique 300, en exploitant l'énergie calorifique ou frigorifique soit d'une source géothermique 400, soit d'une source aérothermique 500, soit simultanément des deux sources géothermique et aérothermique. La machine thermodynamique 100 permet de sélectionner à chaque instant entre les sources géothermique et aérothermique la source qui sera exploitée avec le meilleur rendement énergétique selon que le circuit de commande constate que la température TAIR est supérieure à la température TGEO ou que la température TAIR est inférieure à la température TGEO.

Le circuit de commande 600 est configuré pour gérer de façon active la source géothermique 400. Le circuit de commande peut suivre l'état de la source géothermique soit à l'aide de la température TSOL mesurée par le troisième capteur de température 404, soit à l'aide de la température TGEO mesurée par le premier capteur 44 combiné au circuit d'estimation. Le circuit de commande effectue à certaines périodes de l'année une recharge ou une décharge en énergie calorifique de la source géothermique depuis la source aérothermique, c'est-à-dire un apport ou une extraction de calories. Lorsque le circuit de commande 600 constate que l'écart entre la température de la source géothermique et la température prévisionnelle atteint un écart seuil, le circuit de commande active une phase de recharge ou une phase de décharge. Lorsque la température de la source géothermique est inférieure à la température prévisionnelle et que la température de l'air ambiant est supérieure à la température de la source géothermique, le circuit de commande active le transfert des calories depuis la source aérothermique vers la source géothermique. Lorsque la température de la source géothermique est supérieure à la température prévisionnelle et que la température de l'air ambiant est inférieure à la température de la source géothermique, le circuit de commande active le transfert des calories depuis la source géothermique vers la source aérothermique.

En utilisant plusieurs circuits frigorigènes, il est possible de fournir simultanément de l'énergie calorifique à une charge calorifique 200 et de l'énergie frigorifique à une charge frigorifique 300 en exploitant la source géothermique 400 ou la source aérothermique 500 qui conduit au meilleur rendement énergétique, tout en effectuant une recharge calorifique ou frigorifique de la source géothermique 400 depuis la source aérothermique 500, cette dernière opération pouvant être réalisée avec un haut rendement énergétique dès lors que les conditions de l'air ambiant sont favorables. Les mêmes critères utilisant la comparaison des températures TAIR et TGEO sont utilisés.

De manière avantageuse, la machine thermodynamique 100 est configurée pour produire une énergie calorifique sur la charge calorifique 200 pour des applications de chauffage et/ou de production d'eau chaude sanitaire, par exemple nécessitant le chauffage d'un fluide caloporteur à une température comprise entre 20°C et 100°C. La machine thermodynamique est également configurée pour produire une énergie frigorifique sur la charge frigorifique 300 pour des applications de refroidissement d'un fluide caloporteur de préférence dans la gamme 0°C - 20°C. Bien que l'invention ait été décrite en référence à un mode de réalisation particulier, elle n'est nullement limitée à ce mode de réalisation. Elle n'est limitée que par les revendications qui suivent.

## Revendications

1. Machine thermodynamique comportant :
- un premier échangeur de chaleur (2) possédant au moins un circuit primaire où circule un fluide frigorigène et au moins un circuit secondaire destiné à être parcouru par un premier fluide caloporteur, le premier échangeur de chaleur (2) étant configuré pour condenser le fluide frigorigène ;
- un deuxième échangeur de chaleur (3) possédant au moins un circuit primaire où circule le fluide frigorigène et au moins un circuit secondaire destiné à être parcouru par un deuxième fluide caloporteur, le deuxième échangeur de chaleur (3) étant configuré pour évaporer le fluide frigorigène ;
- un troisième échangeur de chaleur (4) destiné à coopérer avec une source géothermique (400) et possédant au moins un circuit primaire où circule le fluide frigorigène et au moins un circuit secondaire, le troisième échangeur de chaleur étant configuré pour évaporer ou condenser le fluide frigorigène ;
- un quatrième échangeur de chaleur (5) destiné à coopérer avec une source aérothermique (500) et possédant au moins un circuit primaire où circule le fluide frigorigène et au moins un circuit secondaire, le quatrième échangeur de chaleur étant configuré pour évaporer ou condenser le fluide frigorigène ;
- au moins un premier circuit frigorigène (1) à l'intérieur duquel circule le fluide frigorigène, le au moins un premier circuit frigorigène connectant le premier échangeur de chaleur (2), le deuxième échangeur de chaleur (3), le troisième échangeur de chaleur (4), et le quatrième échangeur de chaleur (5) ;
dans laquelle le au moins un premier circuit frigorigène (1) comporte :
- un compresseur (6) monté entre une sortie du deuxième échangeur de chaleur (3) et une entrée du premier échangeur de chaleur (2) ;
- un premier détendeur (7) monté entre une sortie du premier échangeur de chaleur (2) et une entrée du deuxième échangeur de chaleur (3) ;
- un premier nœud de liaison (17) reliant la sortie du compresseur (6) à l'entrée du premier échangeur de chaleur (2), à un premier dispositif de commutation (10, 11, 21) et à un deuxième dispositif de commutation (12, 13, 22) ;
- un deuxième nœud de liaison (18) reliant la sortie du premier échangeur de chaleur (2) à une entrée du premier détendeur (7) et à un troisième dispositif de commutation (14, 15, 23) ;
- un troisième nœud de liaison (19) reliant l'entrée du deuxième échangeur de chaleur (3) avec une sortie du premier détendeur (7) et avec le troisième dispositif de commutation (14, 15, 23) ;
- un quatrième nœud de liaison (20) reliant la sortie du deuxième échangeur de chaleur (3) à l'entrée du compresseur (6), au premier dispositif de commutation (10, 11, 21) et au deuxième dispositif de commutation (12, 13, 22) ;
- le premier dispositif de commutation (10, 11, 21) étant configuré pour définir sélectivement une première configuration ou une seconde configuration, la première configuration définissant un premier canal de circulation du fluide frigorigène reliant le premier nœud de liaison (17) à la première entrée/sortie du troisième échangeur de chaleur (4) et empêchant la circulation du fluide frigorigène à travers le premier dispositif de commutation (10, 11, 21) jusqu'au quatrième nœud de liaison (20), la deuxième configuration définissant un deuxième canal de circulation du fluide frigorigène reliant une première entrée/sortie du troisième échangeur de chaleur (4) au quatrième nœud de liaison (20) et empêchant la circulation du fluide frigorigène à travers le premier dispositif de commutation (10, 11, 21) depuis le premier nœud de liaison (17) ;
- le deuxième dispositif de commutation (12, 13, 22) étant configuré pour définir sélectivement une première configuration ou une seconde configuration, la première configuration définissant un premier canal de circulation du fluide frigorigène reliant le premier nœud de liaison (17) à la première entrée/sortie du quatrième échangeur de chaleur (5) et empêchant la circulation du fluide frigorigène à travers le deuxième dispositif de commutation (12, 13, 22) jusqu'au quatrième nœud de liaison (20), la deuxième configuration définissant un deuxième canal de circulation du fluide frigorigène reliant une première entrée/sortie du quatrième échangeur de chaleur (5) au quatrième nœud de liaison (20) et empêchant la circulation du fluide frigorigène à travers le deuxième dispositif de commutation (12, 13, 22) depuis le premier nœud de liaison (17) ;
- le troisième dispositif de commutation (14, 15, 23) étant configuré pour définir sélectivement une première configuration, une seconde configuration ou une troisième configuration, la première configuration définissant un premier canal de circulation du fluide frigorigène reliant le deuxième nœud de liaison (18) à une deuxième entrée/sortie du troisième échangeur de chaleur (4) et à une deuxième entrée/sortie du quatrième échangeur de chaleur (5) et empêchant la circulation du fluide frigorigène à travers le troisième dispositif de commutation (14, 15, 23) jusqu'au troisième nœud de liaison (19), la deuxième configuration définissant un deuxième canal de circulation du fluide frigorigène reliant la deuxième entrée/sortie du troisième échangeur de chaleur (4) et la deuxième entrée/sortie du quatrième échangeur de chaleur (5) au troisième nœud de liaison (19) et empêchant la circulation du fluide frigorigène à travers le troisième dispositif de commutation (14, 15, 23) depuis le deuxième nœud de liaison (18), la troisième configuration empêchant la circulation du fluide frigorigène à travers le troisième dispositif de commutation (14, 15, 23) depuis le deuxième nœud de liaison (18) et empêchant la circulation du fluide frigorigène à travers le troisième dispositif de commutation (14, 15, 23) jusqu'au troisième nœud de liaison (19) et reliant la deuxième entrée/sortie du troisième échangeur de chaleur (4) et la deuxième entrée/sortie du quatrième échangeur de chaleur (5);
- un second détenteur (8) monté entre le troisième dispositif de commutation (14, 15, 23) et la deuxième entrée/sortie du troisième échangeur de chaleur (4) ;
- un troisième détenteur (9) monté entre le troisième dispositif de commutation (14, 15, 23) et la deuxième entrée/sortie du quatrième échangeur de chaleur (5).

2. Machine thermodynamique selon la revendication 1, **caractérisée en ce que** le second détenteur (8) et le troisième détendeur (9) sont des détendeurs bidirectionnels.

3. Machine thermodynamique selon l'une des revendications précédente, **caractérisée en ce qu'**elle comporte un circuit de commande (600) configuré pour définir sélectivement au moins deux modes de fonctionnement parmi:
- un premier mode de fonctionnement dans lequel le premier dispositif de commutation (10, 11, 21) et le deuxième dispositif de commutation (12, 13, 22) sont dans la deuxième configuration, et le troisième dispositif de commutation (14, 15, 23) est dans la première configuration, pour transférer des calories depuis le circuit secondaire du deuxième échangeur de chaleur (3) et/ou depuis un circuit secondaire du troisième échangeur de chaleur (4) et/ou depuis un circuit secondaire du quatrième échangeur de chaleur (5) vers le circuit secondaire du premier échangeur de chaleur (2) ;
- un deuxième mode de fonctionnement dans lequel le premier dispositif de commutation (10, 11, 21) et le deuxième dispositif de commutation (12, 13, 22) sont dans la première configuration, et le troisième dispositif de commutation (14, 15, 23) est dans la seconde configuration, pour transférer des calories depuis le circuit secondaire du deuxième échangeur de chaleur (3) vers le circuit secondaire du premier échangeur de chaleur (2) et/ou vers le circuit secondaire du troisième échangeur de chaleur (4) et/ou vers le circuit secondaire du quatrième échangeur de chaleur (5) ;
- un troisième mode de fonctionnement dans lequel le premier dispositif de commutation (10, 11, 21) est dans la deuxième configuration, le deuxième dispositif de commutation (12, 13, 22) est dans la première configuration et le troisième dispositif de commutation (14, 15, 23) est dans la troisième configuration, pour transférer des calories depuis le circuit secondaire du troisième échangeur de chaleur (4) vers le circuit secondaire du quatrième échangeur de chaleur (5) ;
- un quatrième mode de fonctionnement dans lequel le premier dispositif de commutation (10, 11, 21) est dans la première configuration, le deuxième dispositif de commutation (12, 13, 22) est dans la deuxième configuration et le troisième dispositif de commutation (14, 15, 23) est dans la troisième configuration, pour transférer des calories depuis le circuit secondaire du quatrième échangeur de chaleur (5) vers le circuit secondaire du troisième échangeur de chaleur (4) ;

4. Machine thermodynamique selon la revendication précédente, comportant :
- un premier capteur de température (44) configuré pour mesurer la température (TGEO) à l'entrée du au moins un circuit secondaire du troisième échangeur de chaleur (4) ;
- un deuxième capteur de température (54) configuré pour mesurer la température (TAIR) à l'entrée du au moins un circuit secondaire du quatrième échangeur de chaleur (5) ;
et dans laquelle le deuxième détendeur (8) et le troisième détendeur (9) sont à taux d'ouverture variable et en ce que le circuit de commande (600) est configuré pour contrôler le taux d'ouverture du deuxième détendeur (8) et le taux d'ouverture du troisième détendeur (9) et ajuster la puissance calorifique ou frigorifique transmise respectivement à travers le troisième échangeur de chaleur (4) et le quatrième échangeur de chaleur (5) en fonction des valeurs de températures (TGEO, TAIR) mesurées à l'entrée du au moins un circuit secondaire du troisième échangeur de chaleur (4) et à l'entrée du au moins un circuit secondaire du quatrième échangeur de chaleur (5).

5. Machine thermodynamique selon la revendication précédente, **caractérisée en ce que** le circuit de commande (600) est configuré pour fermer le deuxième détendeur (8) dans le premier mode de fonctionnement quand le circuit de commande (600) constate que la valeur de température (TGEO) à l'entrée du au moins un circuit secondaire du troisième échangeur de chaleur (4) est inférieure à la valeur de température (TAIR) à l'entrée du au moins un circuit secondaire du quatrième échangeur de chaleur (5).

6. Machine thermodynamique selon l'une des revendications 4 à 5, **caractérisée en ce que** le circuit de commande (600) est configuré pour fermer le troisième détendeur (9) dans le premier mode de fonctionnement quand le circuit de commande (600) constate que la valeur de température (TGEO) à l'entrée du au moins un circuit secondaire du troisième échangeur de chaleur (4) est supérieure à la valeur de température (TAIR) à l'entrée du au moins un circuit secondaire du quatrième échangeur de chaleur (5).

7. Machine thermodynamique selon l'une des revendications 4 à 6, **caractérisée en ce que** le circuit de commande (600) est configuré pour fermer le deuxième détendeur (8) dans le deuxième mode de fonctionnement quand le circuit de commande (600) constate que la valeur de température (TGEO) à l'entrée du au moins un circuit secondaire du troisième échangeur de chaleur (4) est supérieure à la valeur de température (TAIR) à l'entrée du au moins un circuit secondaire du quatrième échangeur de chaleur (5).

8. Machine thermodynamique selon l'une des revendications 4 à 7, **caractérisée en ce que** le circuit de commande (600) est configuré pour fermer le troisième détendeur (9) dans le deuxième mode de fonctionnement quand le circuit de commande (600) constate que la valeur de température (TGEO) à l'entrée du au moins un circuit secondaire du troisième échangeur de chaleur (4) est inférieure à la valeur de température (TAIR) à l'entrée du au moins un circuit secondaire du quatrième échangeur de chaleur (5).

9. Machine thermodynamique selon l'une des revendications 4 à 8, comportant des moyens de mesure de la température de la source géothermique (400) et dans laquelle le circuit de commande (600) comporte un modèle prévisionnel de la température de la source géothermique (400) dans le temps, le circuit de commande (600) étant configuré pour activer le troisième mode de fonctionnement ou le quatrième mode de fonctionnement lorsque le circuit de commande (600) constate que la température de la source géothermique (400) s'écarte de la température du modèle prévisionnel au-delà d'une valeur seuil.

10. Machine thermodynamique selon la revendication précédente dans laquelle les moyens de mesure de la température de la source géothermique (400) comportent le premier capteur de température (44) et un dispositif d'estimation configuré pour estimer la température de la source géothermique à partir de la température (TGEO) à l'entrée du au moins un circuit secondaire du troisième échangeur de chaleur (4).

11. Machine thermodynamique selon la revendication 9 dans laquelle les moyens de mesure de la température de la source géothermique (400) comportent un troisième capteur de température (403) destiné à être installé dans le sous-sol à proximité de la source géothermique.

12. Machine thermodynamique selon l'une des revendications 10 à 11, dans laquelle le circuit de commande (600) est configuré pour activer le troisième mode de fonctionnement seulement lorsque le circuit de commande (600) constate que la température (TAIR) à l'entrée du au moins un circuit secondaire du quatrième échangeur de chaleur (5) est inférieure à la température (TGEO) à l'entrée du au moins un circuit secondaire du troisième échangeur de chaleur (4) et/ou pour activer le quatrième mode de fonctionnement seulement lorsque le circuit de commande (600) constate que la température (TAIR) à l'entrée du au moins un circuit secondaire du quatrième échangeur de chaleur (5) est supérieure à la température (TGEO) à l'entrée du au moins un circuit secondaire du troisième échangeur de chaleur (4).

13. Machine thermodynamique selon l'une des revendications précédentes, **caractérisée en ce qu'**elle comporte un second circuit frigorigène (101) distinct du premier circuit frigorigène (1) à l'intérieur duquel circule un second fluide frigorigène, le second circuit frigorigène (101) connectant le premier échangeur de chaleur (2), le deuxième échangeur de chaleur (3), le troisième échangeur de chaleur (4) et le quatrième échangeur de chaleur (5), le second circuit frigorigène (101) possédant un compresseur (106), un premier détendeur (107), un deuxième détendeur (108) et un troisième détendeur (109), un premier nœud de liaison (117), un deuxième nœud de liaison (118), un troisième nœud de liaison (119), un quatrième nœud de liaison (120), un premier dispositif de commutation (110, 111, 121), un deuxième dispositif de commutation (112, 113, 122) et un troisième dispositif de commutation (114, 115, 123) agencés de manière semblable au premier circuit frigorigène (1).

14. Machine thermodynamique selon la combinaison des revendications 3 et 13, **caractérisée en ce que** le circuit de commande (600) est configuré pour définir sélectivement pour le second circuit frigorigène (101) des premier, deuxième, troisième et quatrième modes de fonctionnement semblables aux premier, deuxième, troisième et quatrième modes de fonctionnement du premier circuit frigorigène (1).

15. Machine thermodynamique selon la revendication précédente, **caractérisée en ce que** le circuit de commande (600) est configuré pour définir une configuration dans laquelle le premier circuit frigorigène (1) est dans le premier mode de fonctionnement, le troisième détendeur (9) du premier circuit frigorigène (1) étant maintenu fermé, et le second circuit frigorigène (101) est dans le troisième mode de fonctionnement.

16. Machine thermodynamique selon l'une des revendications 14 et 15, **caractérisée en ce que** le circuit de commande (600) est configuré pour définir une configuration dans laquelle le premier circuit frigorigène (1) est dans le premier mode de fonctionnement, le second détendeur (8) du premier circuit frigorigène (1) étant maintenu fermé, et le second circuit frigorigène (101) est dans le quatrième mode de fonctionnement.

17. Machine thermodynamique selon l'une quelconque des revendications 14 à 16, **caractérisée en ce que** le circuit de commande (600) est configuré pour définir une configuration dans laquelle le premier circuit frigorigène (1) est dans le deuxième mode de fonctionnement, le troisième détendeur (9) du premier circuit frigorigène (1) étant maintenu fermé, et le second circuit frigorigène (101) est dans le quatrième mode de fonctionnement.

18. Machine thermodynamique selon l'une quelconque des revendications 14 à 17, **caractérisée en ce que** le circuit de commande (600) est configuré pour définir une configuration dans laquelle le premier circuit frigorigène (1) est dans le deuxième mode de fonctionnement, le second détendeur (8) du premier circuit frigorigène (1) étant maintenu fermé, et le second circuit frigorigène (101) est dans le troisième mode de fonctionnement.

19. Procédé de fonctionnement d'une machine thermodynamique comportant les étapes :
- Fournir une machine thermodynamique selon l'une des revendications 1 à 12 ;
- Faire fonctionner la machine thermodynamique dans un mode de fonctionnement choisi parmi :
i) un montage parallèle du deuxième échangeur de chaleur (3), du troisième échangeur de chaleur (4) et du quatrième échangeur de chaleur (5), le deuxième échangeur de chaleur (3), le troisième échangeur de chaleur (4) et le quatrième échangeur de chaleur (5) fonctionnant en évaporateurs de fluide frigorigène, entre la sortie du premier échangeur de chaleur (2) qui fonctionne en condenseur de fluide frigorigène, et l'entrée du compresseur (6),
ii) un montage parallèle du premier échangeur de chaleur (2), du troisième échangeur de chaleur (4) et du quatrième échangeur de chaleur (5), le premier échangeur de chaleur (2), le troisième échangeur de chaleur (4) et le quatrième échangeur de chaleur (5) fonctionnant en condenseurs de fluide frigorigène, entre la sortie du compresseur (6) et l'entrée du deuxième échangeur de chaleur (3) qui fonctionne en évaporateur de fluide frigorigène,
iii) un montage série du quatrième échangeur de chaleur (5) qui fonctionne en condenseur de fluide frigorigène, et du troisième échangeur de chaleur (4) qui fonctionne en évaporateur de fluide frigorigène, entre la sortie du compresseur (6) et l'entrée du compresseur (6),
iv) un montage série du troisième échangeur de chaleur (4) qui fonctionne en condenseur de fluide frigorigène, et du quatrième échangeur de chaleur (5) qui fonctionne en évaporateur de fluide frigorigène, entre la sortie du compresseur (6) et l'entrée du compresseur (6).

20. Procédé de fonctionnement d'une machine thermodynamique comportant les étapes :
- Fournir une machine thermodynamique selon l'une des revendications 13 à 18 ;
- Faire fonctionner la machine thermodynamique dans au moins un des modes de fonctionnement choisi parmi :
i) le premier échangeur de chaleur (2) condense le premier fluide frigorigène, le deuxième échangeur de chaleur (3) évapore le premier fluide frigorigène, le troisième échangeur de chaleur (4) évapore le premier fluide frigorigène et le second fluide frigorigène, le quatrième échangeur de chaleur (5) condense le second fluide frigorigène, le premier fluide frigorigène ne passe pas au travers du quatrième échangeur de chaleur (5), et le second fluide frigorigène ne passe pas au travers des premier et second échangeurs de chaleur (2) et (3),
ii) le premier échangeur de chaleur (2) condense le premier fluide frigorigène, le deuxième échangeur de chaleur (3) évapore le premier fluide frigorigène, le troisième échangeur de chaleur (4) condense le second fluide frigorigène, le quatrième échangeur de chaleur (5) évapore le premier fluide frigorigène et le second fluide frigorigène, le premier fluide frigorigène ne passe pas au travers du troisième échangeur de chaleur (4), et le second fluide frigorigène ne passe pas au travers des premier et second échangeurs de chaleur (2) et (3),
iii) le premier échangeur de chaleur (2) condense le premier fluide frigorigène, le deuxième échangeur de chaleur (3) évapore le premier fluide frigorigène, le troisième échangeur de chaleur (4) condense le premier fluide frigorigène et le second fluide frigorigène, le quatrième échangeur de chaleur (5) évapore le second fluide frigorigène, le premier fluide frigorigène ne passe pas au travers du quatrième échangeur de chaleur (5), et le second fluide frigorigène ne passe pas au travers des premier et second échangeurs de chaleur (2) et (3),
iv) le premier échangeur de chaleur (2) condense le premier fluide frigorigène, le deuxième échangeur de chaleur (3) évapore le premier fluide frigorigène, le troisième échangeur de chaleur (4) évapore le second fluide frigorigène, le quatrième échangeur de chaleur (5) condense le premier fluide frigorigène et le second fluide frigorigène, le premier fluide frigorigène ne passe pas au travers du troisième échangeur de chaleur (4), et le second fluide frigorigène ne passe pas au travers des premier et second échangeurs de chaleur (2) et (3).

## Patentansprüche

1. Thermodynamische Maschine, umfassend:
- einen ersten Wärmetauscher (2), umfassend mindestens einen Primärkreislauf, in dem ein Kältemittel zirkuliert, und mindestens einen Sekundärkreislauf, der dazu bestimmt ist, von einer ersten Wärmeträgerflüssigkeit durchströmt zu werden, wobei der erste Wärmetauscher (2) eingerichtet ist, um das Kältemittel zu kondensieren;
- einen zweiten Wärmetauscher (3), umfassend mindestens einen Primärkreislauf, in dem das Kältemittel zirkuliert, und mindestens einen Sekundärkreislauf, der dazu bestimmt ist, von einer zweiten Wärmeträgerflüssigkeit durchströmt zu werden, wobei der zweite Wärmetauscher (3) eingerichtet ist, um das Kältemittel zu verdampfen;
- einen dritten Wärmetauscher (4), der dazu bestimmt ist, mit einer geothermischen Quelle (400) zusammenzuwirken, und umfassend mindestens einen Primärkreislauf, in dem das Kältemittel zirkuliert, und mindestens einen Sekundärkreislauf, wobei der dritte Wärmetauscher eingerichtet ist, um das Kältemittel zu verdampfen oder zu kondensieren;
- einen vierten Wärmetauscher (5), der dazu bestimmt ist, mit einer aerothermischen Quelle (500) zusammenzuwirken, und umfassend mindestens einen Primärkreislauf, in dem das Kältemittel zirkuliert, und mindestens einen Sekundärkreislauf, wobei der dritte Wärmetauscher eingerichtet ist, um das Kältemittel zu verdampfen oder zu kondensieren;
- mindestens einen ersten Kältemittelkreislauf (1), in dem das Kältemittel zirkuliert, wobei der mindestens eine erste Kältemittelkreislauf den ersten Wärmetauscher (2), den zweiten Wärmetauscher (3), den dritten Wärmetauscher (4) und den vierten Wärmetauscher (5) verbindet;
wobei der mindestens eine erste Kältemittelkreislauf (1) umfasst:
- einen Kompressor (6), der zwischen einem Ausgang des zweiten Wärmetauschers (3) und einem Eingang des ersten Wärmetauschers (2) montiert ist;
- einen ersten Druckminderer (7), der zwischen einem Ausgang des ersten Wärmetauschers (2) und einem Eingang des zweiten Wärmetauschers (3) montiert ist;
- einen ersten Verbindungsknoten (17), der den Ausgang des Kompressors (6) mit dem Eingang des ersten Wärmetauschers (2) mit einer ersten Umschaltvorrichtung (10, 11, 21) und einer zweiten Umschaltvorrichtung (12, 13, 22) verbindet);
- einen zweiten Verbindungsknoten (18), der den Ausgang des ersten Wärmetauschers (2) mit einem Eingang des ersten Druckminderers (7) und einer dritten Umschaltvorrichtung (14, 15, 23) verbindet;
- einen dritten Verbindungsknoten (19), der den Eingang des zweiten Wärmetauschers (3) mit einem Ausgang des ersten Druckminderers (7) und mit der dritten Umschaltvorrichtung (14, 15, 23) verbindet;
- einen vierten Verbindungsknoten (20), der den Ausgang des zweiten Wärmetauschers (3) mit dem Eingang des Kompressors (6), mit der ersten Umschaltvorrichtung (10, 11, 21) und mit der zweiten Umschaltvorrichtung (12, 13, 22) verbindet;
- wobei die erste Umschaltvorrichtung (10, 11, 21) eingerichtet ist, um selektiv eine erste Konfiguration oder eine zweite Konfiguration zu definieren, wobei die erste Konfiguration einen ersten Zirkulationskanal des Kältemittels definiert, der den ersten Verbindungsknoten (17) mit dem ersten Eingang/Ausgang des dritten Wärmetauschers (4) verbindet und die Zirkulation des Kältemittels durch die erste Umschaltvorrichtung (10, 11, 21) bis zum vierten Verbindungsknoten (20) verhindert, wobei die zweite Konfiguration einen zweiten Zirkulationskanal des Kältemittels definiert, der einen ersten Eingang/Ausgang des dritten Wärmetauschers (4) mit dem vierten Verbindungsknoten (20) verbindet und die Zirkulation des Kältemittels durch die erste Umschaltvorrichtung (10, 11, 21) von dem ersten Verbindungsknoten (17) aus verhindert;
- wobei die zweite Umschaltvorrichtung (12, 13, 22) eingerichtet ist, um selektiv eine erste Konfiguration oder eine zweite Konfiguration zu definieren, wobei die erste Konfiguration einen ersten Zirkulationskanal des Kältemittels definiert, der den ersten Verbindungsknoten (17) mit dem ersten Eingang/Ausgang des vierten Wärmetauschers (5) verbindet und die Zirkulation des Kältemittels durch die zweite Umschaltvorrichtung (12, 13, 22) bis zum vierten Verbindungsknoten (20) verhindert, wobei die zweite Konfiguration einen zweiten Zirkulationskanal des Kältemittels definiert, der einen ersten Eingang/Ausgang des vierten Wärmetauschers (5) mit dem vierten Verbindungsknoten (20) verbindet und die Zirkulation des Kältemittels durch die zweite Umschaltvorrichtung (12, 13, 22) von dem ersten Verbindungsknoten (17) aus verhindert;
- wobei die dritte Umschaltvorrichtung (14, 15, 23) eingerichtet ist, um selektiv eine erste Konfiguration, eine zweite Konfiguration oder eine dritte Konfiguration zu definieren, wobei die erste Konfiguration einen ersten Zirkulationskanal des Kältemittels definiert, der den zweiten Verbindungsknoten (18) mit einem zweiten Eingang/Ausgang des dritten Wärmetauschers (4) und einem zweiten Eingang/Ausgang des vierten Wärmetauschers (5) verbindet und die Zirkulation des Kältemittels durch die dritte Umschaltvorrichtung (14, 15, 23) bis zum dritten Verbindungsknoten (19) verhindert, wobei die zweite Konfiguration einen zweiten Zirkulationskanal des Kältemittels definiert, der den zweiten Eingang/Ausgang des dritten Wärmetauschers (4) und den zweiten Eingang/Ausgang des vierten Wärmetauschers (5) mit dem dritten Verbindungsknoten (19) verbindet und die Zirkulation des Kältemittels durch die dritte Umschaltvorrichtung (14, 15, 23) von dem zweiten Verbindungsknoten (18) aus verhindert, wobei die dritte Konfiguration die Zirkulation des Kältemittels durch die dritte Umschaltvorrichtung (14, 15, 23) von dem zweiten Verbindungsknoten (18) aus verhindert und die Zirkulation des Kältemittels durch die dritte Umschaltvorrichtung (14, 15, 23) bis zum dritten Verbindungsknoten (19) verhindert und den zweiten Eingang/Ausgang des dritten Wärmetauschers (4) und den zweiten Eingang/Ausgang des vierten Wärmetauschers (5) verbindet;
- einen zweiten Druckminderer (8), der zwischen der dritten Umschaltvorrichtung (14, 15, 23) und dem zweiten Eingang/Ausgang des dritten Wärmetauschers (4) montiert ist;
- einen dritten Druckminderer (9), der zwischen der dritten Umschaltvorrichtung (14, 15, 23) und dem zweiten Eingang/Ausgang des vierten Wärmetauschers (5) montiert ist.

2. Thermodynamische Maschine nach Anspruch 1, **dadurch gekennzeichnet, dass** der zweite Druckminderer (8) und der dritte Druckminderer (9) bidirektionale Druckminderer sind.

3. Thermodynamische Maschine nach einem der vorhergehenden Ansprüche, **dadurch gekennzeichnet, dass** sie eine Steuerschaltung (600) umfasst, die eingerichtet ist, um selektiv mindestens zwei Funktionsmodi zu definieren:
- einen ersten Funktionsmodus, in dem die erste Umschaltvorrichtung (10, 11, 21) und die zweite Umschaltvorrichtung (12, 13, 22) in der zweiten Konfiguration sind, und die dritte Umschaltvorrichtung (14, 15, 23) in der ersten Konfiguration ist, um Kalorien von dem Sekundärkreislauf des zweiten Wärmetauschers (3) und/oder von einem Sekundärkreislauf des dritten Wärmetauschers (4) und/oder von einem Sekundärkreislauf des vierten Wärmetauschers (5) zu dem Sekundärkreislauf des ersten Wärmetauschers (2) weiterzuleiten;
- einen zweiten Funktionsmodus, in dem die erste Umschaltvorrichtung (10, 11, 21) und die zweite Umschaltvorrichtung (12, 13, 22) in der ersten Konfiguration sind, und die dritte Umschaltvorrichtung (14, 15, 23) in der zweiten Konfiguration ist, um Kalorien von dem Sekundärkreislauf des zweiten Wärmetauschers (3) zu dem Sekundärkreislauf des erste Wärmetauschers (2) und/oder zu dem Sekundärkreislauf des dritten Wärmetauschers (4) und/oder zu dem Sekundärkreislauf des vierten Wärmetauschers (5) weiterzuleiten;
- einen dritten Funktionsmodus, in dem die erste Umschaltvorrichtung (10, 11, 21) in der zweiten Konfiguration ist, die zweite Umschaltvorrichtung (12, 13, 22) in der ersten Konfiguration ist, und die dritte Umschaltvorrichtung (14, 15, 23) in der dritten Konfiguration ist, um Kalorien von dem Sekundärkreislauf des dritten Wärmetauschers (4) zu dem Sekundärkreislauf des vierten Wärmetauschers (5) weiterzuleiten;
- einen vierten Funktionsmodus, in dem die erste Umschaltvorrichtung (10, 11, 21) in der ersten Konfiguration ist, die zweite Umschaltvorrichtung (12, 13, 22) in der zweiten Konfiguration ist, und die dritte Umschaltvorrichtung (14, 15, 23) in der dritten Konfiguration ist, um Kalorien von dem zweiten Sekundärkreislauf des vierten Wärmetauschers (5) zu dem Sekundärkreislauf des dritten Wärmetauschers (4) weiterzuleiten.

4. Thermodynamische Maschine nach dem vorhergehenden Anspruch, umfassend:
- einen ersten Temperaturfühler (44), der eingerichtet ist, um die Temperatur (TGEO) am Eingang des mindestens einen Sekundärkreislaufs des dritten Wärmetauschers (4) zu messen;
- einen zweiten Temperaturfühler (54), der eingerichtet ist, um die Temperatur (TAIR) am Eingang des mindestens einen Sekundärkreislaufs des vierten Wärmetauschers (5) zu messen;
und bei der der zweite Druckminderer (8) und der dritte Druckminderer (9) einen variablen Öffnungsgrad aufweisen, und bei der die Steuerschaltung (600) eingerichtet ist, um den Öffnungsgrad des zweiten Druckminderers (8) und den Öffnungsgrad des dritten Druckminderers (9) zu kontrollieren und die Wärme- oder Kälteleistung, die jeweils durch den dritten Wärmetauscher (4) und den vierten Wärmetauscher (5) übertragen wird, in Abhängigkeit von den Temperaturwerten (TGEO, TAIR), die am Eingang des mindestens einen Sekundärkreislaufs des dritten Wärmetauschers (4) und am Eingang des mindestens einen Sekundärkreislaufs des vierten Wärmetauschers (5) gemessen wurden, anzupassen.

5. Thermodynamische Maschine nach dem vorhergehenden Anspruch, **dadurch gekennzeichnet, dass** die Steuerschaltung (600) eingerichtet ist, um den zweiten Druckminderer (8) im ersten Funktionsmodus zu schließen, wenn die Steuerschaltung (600) feststellt, dass der Temperaturwert (TGEO) am Eingang des mindestens einen Sekundärkreislaufs des dritten Wärmetauschers (4) niedriger als der Temperaturwert (TAIR) am Eingang des mindestens einen Sekundärkreislaufs des vierten Wärmetauschers (5) ist.

6. Thermodynamische Maschine nach einem der Ansprüche 4 bis 5, **dadurch gekennzeichnet, dass** die Steuerschaltung (600) eingerichtet ist, um den dritten Druckminderer (9) im ersten Funktionsmodus zu schließen, wenn die Steuerschaltung (600) feststellt, dass der Temperaturwert (TGEO) am Eingang des mindestens einen Sekundärkreislaufs des dritten Wärmetauschers (4) höher als der Temperaturwert (TAIR) am Eingang des mindestens einen Sekundärkreislaufs des vierten Wärmetauschers (5) ist.

7. Thermodynamische Maschine nach einem der Ansprüche 4 bis 6, **dadurch gekennzeichnet, dass** die Steuerschaltung (600) eingerichtet ist, um den zweiten Druckminderer (8) im zweiten Funktionsmodus zu schließen, wenn die Steuerschaltung (600) feststellt, dass der Temperaturwert (TGEO) am Eingang des mindestens einen Sekundärkreislaufs des dritten Wärmetauschers (4) höher als der Temperaturwert (TAIR) am Eingang des mindestens einen Sekundärkreislaufs des vierten Wärmetauschers (5) ist.

8. Thermodynamische Maschine nach einem der Ansprüche 4 bis 7, **dadurch gekennzeichnet, dass** die Steuerschaltung (600) eingerichtet ist, um den dritten Druckminderer (9) im zweiten Funktionsmodus zu schließen, wenn die Steuerschaltung (600) feststellt, dass der Temperaturwert (TGEO) am Eingang des mindestens einen Sekundärkreislaufs des dritten Wärmetauschers (4) niedriger als der Temperaturwert (TAIR) am Eingang des mindestens einen Sekundärkreislaufs des vierten Wärmetauschers (5) ist.

9. Thermodynamische Maschine nach einem der Ansprüche 4 bis 8, umfassend Mittel zum Messen der Temperatur der geothermischen Quelle (400), und bei der die Steuerschaltung (600) ein Vorhersagemodell der Temperatur der geothermischen Quelle (400) mit der Zeit umfasst, wobei die Steuerschaltung (600) eingerichtet ist, um den dritten Funktionsmodus oder den vierten Funktionsmodus zu aktivieren, wenn die Steuerschaltung (600) feststellt, dass sich die Temperatur der geothermischen Quelle (400) von der Temperatur des Vorhersagemodells über einen Grenzwert hinaus entfernt.

10. Thermodynamische Maschine nach dem vorhergehenden Anspruch, bei der die Mittel zum Messen der Temperatur der geothermischen Quelle (400) den ersten Temperaturfühler (44) und eine Schätzvorrichtung umfassen, die eingerichtet ist, um die Temperatur der geothermischen Quelle auf Basis der Temperatur (TGEO) am Eingang des mindestens einen Sekundärkreislaufs des dritten Wärmetauschers (4) zu schätzen.

11. Thermodynamische Maschine nach Anspruch 9, bei der die Mittel zum Messen der Temperatur der geothermischen Quelle (400) einen dritten Temperaturfühler (403) umfassen, der dazu bestimmt ist, unterirdisch in der Nähe der geothermischen Quelle installiert zu werden.

12. Thermodynamische Maschine nach einem der Ansprüche 10 bis 11, bei der die Steuerschaltung (600) eingerichtet ist, um den dritten Funktionsmodus nur dann zu aktivieren, wenn die Steuerschaltung (600) feststellt, dass die Temperatur (TAIR) am Eingang des mindestens einen Sekundärkreislaufs des vierten Wärmetauschers (5) niedriger als die Temperatur (TGEO) am Eingang des mindestens einen Sekundärkreislaufs des dritten Wärmetauschers (4) ist, und/oder um den vierten Funktionsmodus nur dann zu aktivieren, wenn die Steuerschaltung (600) feststellt, dass die Temperatur (TAIR) am Eingang des mindestens einen Sekundärkreislaufs des vierten Wärmetauschers (5) höher als die Temperatur (TGEO) am Eingang des mindestens einen Sekundärkreislaufs des dritten Wärmetauschers (4) ist.

13. Thermodynamische Maschine nach einem der vorhergehenden Ansprüche, **dadurch gekennzeichnet, dass** sie einen zweiten Kältemittelkreislauf (101) umfasst, der sich um ersten Kältemittelkreislauf (1) unterscheidet, in dem ein zweites Kältemittel zirkuliert, wobei der zweite Kältemittelkreislauf (101) den ersten Wärmetauscher (2), den zweiten Wärmetauscher (3), den dritten Wärmetauscher (4) und den vierten Wärmetauscher (5) verbindet, wobei der zweite Kältemittelkreislauf (101) einen Kompressor (106), einen ersten Druckminderer (107), einen zweiten Druckminderer (108) und einen dritten Druckminderer (109), einen ersten Verbindungsknoten (117), einen zweiten Verbindungsknoten (118), einen dritten Verbindungsknoten (119), einen vierten Verbindungsknoten (120), eine erste Umschaltvorrichtung (110, 111, 121), eine zweite Umschaltvorrichtung (112, 113, 122) und eine dritte Umschaltvorrichtung (114, 115, 123), die ähnlich wie beim ersten Kältemittelkreislauf (1) angeordnet sind, umfasst.

14. Thermodynamische Maschine nach der Kombination der Ansprüche 3 und 13, **dadurch gekennzeichnet, dass** die Steuerschaltung (600) eingerichtet ist, um selektiv für den zweiten Kältemittelkreislauf (101) erste, zweite, dritte und vierte Funktionsmodi ähnlich den ersten, zweiten, dritten und vierten Funktionsmodi des erste Kältemittelkreislaufs (1) zu definieren.

15. Thermodynamische Maschine nach dem vorhergehenden Anspruch, **dadurch gekennzeichnet, dass** die Steuerschaltung (600) eingerichtet ist, um eine Konfiguration zu definieren, in der der erste Kältemittelkreislauf (1) im ersten Funktionsmodus ist, wobei der dritte Druckminderer (9) des ersten Kältemittelkreislaufs (1) geschlossen gehalten wird, und der zweite Kältemittelkreislauf (101) im dritten Funktionsmodus ist.

16. Thermodynamische Maschine nach einem der Ansprüche 14 und 15, **dadurch gekennzeichnet, dass** die Steuerschaltung (600) eingerichtet ist, um eine Konfiguration zu definieren, in der der erste Kältemittelkreislauf (1) im ersten Funktionsmodus ist, wobei der zweite Druckminderer (8) des ersten Kältemittelkreislaufs (1) geschlossen gehalten wird, und der zweite Kältemittelkreislauf (101) im vierten Funktionsmodus ist.

17. Thermodynamische Maschine nach einem der Ansprüche 14 bis 16, **dadurch gekennzeichnet, dass** die Steuerschaltung (600) eingerichtet ist, um eine Konfiguration zu definieren, in der der erste Kältemittelkreislauf (1) im zweiten Funktionsmodus ist, wobei der dritte Druckminderer (9) des ersten Kältemittelkreislaufs (1) geschlossen gehalten wird, und der zweite Kältemittelkreislauf (101) im vierten Funktionsmodus ist.

18. Thermodynamische Maschine nach einem der Ansprüche 14 bis 17, **dadurch gekennzeichnet, dass** die Steuerschaltung (600) eingerichtet ist, um eine Konfiguration zu definieren, in der der erste Kältemittelkreislauf (1) im zweiten Funktionsmodus ist, wobei der zweite Druckminderer (8) des ersten Kältemittelkreislaufs (1) geschlossen gehalten wird, und der zweite Kältemittelkreislauf (101) im dritten Funktionsmodus ist.

19. Verfahren für den Betrieb einer thermodynamischen Maschine, umfassend die folgenden Schritte:
- Bereitstellen einer thermodynamischen Maschine nach einem der Ansprüche 1 bis 12;
- Betreiben der thermodynamischen Maschine in einem Funktionsmodus, ausgewählt unter:
i) einer parallelen Montage des zweiten Wärmetauschers (3), des dritten Wärmetauschers (4) und des vierten Wärmetauschers (5), wobei der zweite Wärmetauscher (3), der dritte Wärmetauscher (4) und der vierte Wärmetauscher (5) als Kältemittelverdampfer zwischen dem Ausgang des ersten Wärmetauschers (2), der als Kältemittelkondensator funktioniert, und dem Eingang des Kompressors (6) funktionieren,
ii) einer parallelen Montage des ersten Wärmetauschers (2), des dritten Wärmetauschers (4) und des vierten Wärmetauschers (5), wobei der erste Wärmetauscher (2), der dritte Wärmetauscher (4) und der vierte Wärmetauscher (5) als Kältemittelkondensatoren zwischen dem Ausgang des Kompressors (6) und dem Eingang des zweiten Wärmetauschers (3), der als Kältemittelverdampfer funktioniert, funktionieren,
iii) einer seriellen Montage des vierten Wärmetauschers (5), der als Kältemittelkondensator funktioniert, und des dritten Wärmetauschers (4), der als Kältemittelverdampfer funktioniert, zwischen dem Ausgang des Kompressors (6) und dem Eingang des Kompressors (6),
iv) einer seriellen Montage des dritten Wärmetauschers (4), der als Kältemittelkondensator funktioniert, und des vierten Wärmetauschers (5), der als Kältemittelverdampfer funktioniert, zwischen dem Ausgang des Kompressors (6) und dem Eingang des Kompressors (6).

20. Verfahren für den Betrieb einer thermodynamischen Maschine, umfassend die folgenden Schritte:
- Bereitstellen einer thermodynamischen Maschine nach einem der Ansprüche 13 bis 18;
- Betreiben der thermodynamischen Maschine in einem Funktionsmodus, ausgewählt unter:
i) der erste Wärmetauscher (2) kondensiert das erste Kältemittel, der zweite Wärmetauscher (3) verdampft das erste Kältemittel, der dritte Wärmetauscher (4) verdampft das erste Kältemittel und das zweite Kältemittel, der vierte Wärmetauscher (5) kondensiert das zweite Kältemittel, das erste Kältemittel strömt nicht durch den vierten Wärmetauscher (5), und das zweite Kältemittel strömt nicht durch die ersten und zweiten Wärmetauscher (2) und (3),
ii) der erste Wärmetauscher (2) kondensiert das erste Kältemittel, der zweite Wärmetauscher (3) verdampft das erste Kältemittel, der dritte Wärmetauscher (4) kondensiert das zweite Kältemittel, der vierte Wärmetauscher (5) verdampft das erste Kältemittel und das zweite Kältemittel, das erste Kältemittel strömt nicht durch den dritten Wärmetauscher (4), und das zweite Kältemittel strömt nicht durch die ersten und zweiten Wärmetauscher (2) und (3),
iii) der erste Wärmetauscher (2) kondensiert das erste Kältemittel, der zweite Wärmetauscher (3) verdampft das erste Kältemittel, der dritte Wärmetauscher (4) kondensiert das erste Kältemittel und das zweite Kältemittel, der vierte Wärmetauscher (5) verdampft das zweite Kältemittel, das erste Kältemittel strömt nicht durch den vierten Wärmetauscher (5), und das zweite Kältemittel strömt nicht durch die ersten und zweiten Wärmetauscher (2) und (3),
iv) der erste Wärmetauscher (2) kondensiert das erste Kältemittel, der zweite Wärmetauscher (3) verdampft das erste Kältemittel, der dritte Wärmetauscher (4) verdampft das zweite Kältemittel, der vierte Wärmetauscher (5) kondensiert das erste Kältemittel und das zweite Kältemittel, das erste Kältemittel strömt nicht durch den dritten Wärmetauscher (4), und das zweite Kältemittel strömt nicht durch die ersten und zweiten Wärmetauscher (2) und (3).

## Claims

1. Thermodynamic machine comprising:
- a first heat exchanger (2) having at least a primary circuit where a refrigerant flows and at least a secondary circuit through which a first heat transfer fluid is designed to flow, the first heat exchanger (2) being configured to condense the refrigerant;
- a second heat exchanger (3) having at least a primary circuit where the refrigerant flows and at least a secondary circuit through which a second heat transfer fluid is designed to flow, the second heat exchanger (3) being configured to evaporate the refrigerant;
- a third heat exchanger (4) designed to operate in conjunction with a geothermal source (400) and having at least a primary circuit where the refrigerant flows and at least a secondary circuit, the third heat exchanger being configured to evaporate or condense the refrigerant;
- a fourth heat exchanger (5) designed to operate in conjunction with an aerothermal source (500) and having at least a primary circuit where the refrigerant flows and at least a secondary circuit, the fourth heat exchanger being configured to evaporate or condense the refrigerant;
- at least a first refrigerant circuit (1) inside which the refrigerant flows, the at least a first refrigerant circuit connecting the first heat exchanger (2), the second heat exchanger (3), the third heat exchanger (4) and the fourth heat exchanger (5);
wherein the at least a first refrigerant circuit (1) comprises:
- a compressor (6) installed between an outlet of the second heat exchanger (3) and an inlet of the first heat exchanger (2);
- a first pressure reducer (7) installed between an outlet of the first heat exchanger (2) and an inlet of the second heat exchanger (3);
- a first connection node (17) connecting the outlet of the compressor (6) to the inlet of the first heat exchanger (2), to a first switching device (10, 11, 21) and to a second switching device (12, 13, 22);
- a second connection node (18) connecting the outlet of the first heat exchanger (2) to an inlet of the first pressure reducer (7) and to a third switching device (14, 15, 23);
- a third connection node (19) connecting the inlet of the second heat exchanger (3) to an outlet of the first pressure reducer (7) and to the third switching device (14, 15, 23);
- a fourth connection node (20) connecting the outlet of the second heat exchanger (3) to the inlet of the compressor (6), to the first switching device (10, 11, 21) and to the second switching device (12, 13, 22);
- the first switching device (10, 11, 21) being configured to selectively define a first configuration or a second configuration, the first configuration defining a first flow channel of the refrigerant connecting the first connection node (17) to the first inlet/outlet of the third heat exchanger (4) and preventing flow of the refrigerant through the first switching device (10, 11, 21) to the fourth connection node (20), the second configuration defining a second flow channel of the refrigerant connecting a first inlet/outlet of the third heat exchanger (4) to the fourth connection node (20) and preventing flow of the refrigerant through the first switching device (10, 11, 21) from the first connection node (17);
- the second switching device (12, 13, 22) being configured to selectively define a first configuration or a second configuration, the first configuration defining a first flow channel of the refrigerant connecting the first connection node (17) to the first inlet/outlet of the fourth heat exchanger (5) and preventing flow of the refrigerant through the second switching device (12, 13, 22) to the fourth connection node (20), the second configuration defining a second flow channel of the refrigerant connecting a first inlet/outlet of the fourth heat exchanger (5) to the fourth connection node (20) and preventing flow of the refrigerant through the second switching device (12, 13, 22) from the first connection node (17);
- the third switching device (14, 15, 23) being configured to selectively define a first configuration, a second configuration or a third configuration, the first configuration defining a first flow channel of the refrigerant connecting the second connection node (18) to a second inlet/outlet of the third heat exchanger (4) and to a second inlet/outlet of the fourth heat exchanger (5) and preventing flow of the refrigerant through the third switching device (14, 15, 23) to the third connection node (19), the second configuration defining a second flow channel of the refrigerant connecting the second inlet/outlet of the third heat exchanger (4) and the second inlet/outlet of the fourth heat exchanger (5) to the third connection node (19) and preventing flow of the refrigerant through the third switching device (14, 15, 23) from the second connection node (18), the third configuration preventing flow of the refrigerant through the third switching device (14, 15, 23) from the second connection node (18) and preventing flow of the refrigerant through the third switching device (14, 15, 23) to the third connection node (19) and connecting the second inlet/outlet of the third heat exchanger (4) and the second inlet/outlet of the fourth heat exchanger (5);
- a second pressure reducer (8) installed between the third switching device (14, 15, 23) and the second inlet/outlet of the third heat exchanger (4);
- a third pressure reducer (9) installed between the third switching device (14, 15, 23) and the second inlet/outlet of the fourth heat exchanger (5).

2. Thermodynamic machine according to claim 1, **characterized in that** the second pressure reducer (8) and the third pressure reducer (9) are two-way pressure reducers.

3. Thermodynamic machine according to one of the foregoing claims, **characterized in that** it comprises a control circuit (600) configured to selectively define at least two operating modes from the following:
- a first operating mode in which the first switching device (10, 11, 21) and the second switching device (12, 13, 22) are in the second configuration, and the third switching device (14, 15, 23) is in the first configuration, to transfer calories from the secondary circuit of the second heat exchanger (3) and/or from a secondary circuit of the third heat exchanger (4) and/or from the secondary circuit of the fourth heat exchanger (5) to the secondary circuit of the first heat exchanger (2);
- a second operating mode in which the first switching device (10, 11, 21) and the second switching device (12, 13, 22) are in the first configuration, and the third switching device (14, 15, 23) is in the second configuration, to transfer calories from the secondary circuit of the second heat exchanger (3) to the secondary circuit of the first heat exchanger (2) and/or to the secondary circuit of the third heat exchanger (4) and/or to the secondary circuit of the fourth heat exchanger (5);
- a third operating mode in which the first switching device (10, 11, 21) is in the second configuration, the second switching device (12, 13, 22) is in the first configuration and the third switching device (14, 15, 23) is in the third configuration, to transfer calories from the secondary circuit of the third heat exchanger (4) to the secondary circuit of the fourth heat exchanger (5);
- a fourth operating mode in which the first switching device (10, 11, 21) is in the first configuration, the second switching device (12, 13, 22) is in the second configuration and the third switching device (14, 15, 23) is in the third configuration, to transfer calories from the secondary circuit of the fourth heat exchanger (5) to the secondary circuit of the third heat exchanger (4).

4. Thermodynamic machine according to the foregoing claim, comprising:
- a first temperature sensor (44) configured to measure the temperature (TGEO) at the inlet of the at least a secondary circuit of the third heat exchanger (4);
- a second temperature sensor (54) configured to measure the temperature (TAIR) at the inlet of the at least a secondary circuit of the fourth heat exchanger (5);
and wherein the second pressure reducer (8) and the third pressure reducer (9) have a variable degree of opening and wherein the control circuit (600) is configured to control the degree of opening of the second pressure reducer (8) and the degree of opening of the third pressure reducer (9) and to adjust the heating or cooling power respectively transmitted through the third heat exchanger (4) and the fourth heat exchanger (5) according to the temperature values (TGEO, TAIR) measured at the inlet of the at least a secondary circuit of the third heat exchanger (4) and at the inlet of the at least a secondary circuit of the fourth heat exchanger (5).

5. Thermodynamic machine according to the foregoing claim, **characterized in that** the control circuit (600) is configured to close the second pressure reducer (8) in the first operating mode when the control circuit (600) ascertains that the temperature value (TGEO) at the inlet of the at least a secondary circuit of the third heat exchanger (4) is lower than the temperature value (TAIR) at the inlet of the at least a secondary circuit of the fourth heat exchanger (5).

6. Thermodynamic machine according to one of claims 4 to 5, **characterized in that** the control circuit (600) is configured to close the third pressure reducer (9) in the first operating mode when the control circuit (600) ascertains that the temperature value (TGEO) at the inlet of the at least a secondary circuit of the third heat exchanger (4) is higher than the temperature value (TAIR) at the inlet of the at least a secondary circuit of the fourth heat exchanger (5).

7. Thermodynamic machine according to one of claims 4 to 6, **characterized in that** the control circuit (600) is configured to close the second pressure reducer (8) in the second operating mode when the control circuit (600) ascertains that the temperature value (TGEO) at the inlet of the at least a secondary circuit of the third heat exchanger (4) is higher than the temperature value (TAIR) at the inlet of the at least a secondary circuit of the fourth heat exchanger (5).

8. Thermodynamic machine according to one of claims 4 to 7, **characterized in that** the control circuit (600) is configured to close the third pressure reducer (9) in the second operating mode when the control circuit (600) ascertains that the temperature value (TGEO) at the inlet of the at least a secondary circuit of the third heat exchanger (4) is lower than the temperature value (TAIR) at the inlet of the at least a secondary circuit of the fourth heat exchanger (5).

9. Thermodynamic machine according to one of claims 4 to 8, comprising means for measuring the temperature of the geothermal source (400) and wherein the control circuit (600) comprises a forecasting model of the temperature of the geothermal source (400) over time, the control circuit (600) being configured to activate the third operating mode or the fourth operating mode when the control circuit (600) ascertains that the temperature of the geothermal source (400) deviates from the temperature of the forecasting model beyond a threshold value.

10. Thermodynamic machine according to the foregoing claim, wherein the means for measuring the temperature of the geothermal source (400) comprise the first temperature sensor (44) and an estimation device configured to estimate the temperature of the geothermal source from the temperature (TGEO) at the inlet of the at least a secondary circuit of the third heat exchanger (4).

11. Thermodynamic machine according to claim 9, wherein the means for measuring the temperature of the geothermal source (400) comprise a third temperature sensor (403) designed to be installed in the subsoil close to the geothermal source.

12. Thermodynamic machine according to one of claims 10 to 11, wherein the control circuit (600) is configured to activate the third operating mode only when the control circuit (600) ascertains that the temperature (TAIR) at the inlet of the at least a secondary circuit of the fourth heat exchanger (5) is lower than the temperature (TGEO) at the inlet of the at least a secondary circuit of the third heat exchanger (4) and/or to activate the fourth operating mode only when the control circuit (600) ascertains that the temperature (TAIR) at the inlet of the at least a secondary circuit of the fourth heat exchanger (5) is higher than the temperature (TGEO) at the inlet of the at least a secondary circuit of the third heat exchanger (4).

13. Thermodynamic machine according to one of the foregoing claims, **characterized in that** it comprises a second refrigerant circuit (101) distinct from the first refrigerant circuit (1) inside which a second refrigerant flows, the second refrigerant circuit (101) connecting the first heat exchanger (2), the second heat exchanger (3), the third heat exchanger (4) and the fourth heat exchanger (5), the second refrigerant circuit (101) having a compressor (106), a first pressure reducer (107), a second pressure reducer (108) and a third pressure reducer (109), a first connection node (117), a second connection node (118), a third connection node (119), a fourth connection node (120), a first switching device (110, 111, 121), a second switching device (112, 113, 122) and a third switching device (114, 115, 123), arranged in similar manner to the first refrigerant circuit (1).

14. Thermodynamic machine according to a combination of claims 3 and 13, **characterized in that** the control circuit (600) is configured to selectively define for the second refrigerant circuit (101) first, second, third and fourth operating modes similar to the first, second, third and fourth operating modes of the first refrigerant circuit (1).

15. Thermodynamic machine according to the foregoing claim, **characterized in that** the control circuit (600) is configured to define a configuration in which the first refrigerant circuit (1) is in the first operating mode, the third pressure reducer (9) of the first refrigerant circuit (1) being kept closed, and the second refrigerant circuit (101) is in the third operating mode.

16. Thermodynamic machine according to one of claims 14 and 15, **characterized in that** the control circuit (600) is configured to define a configuration in which the first refrigerant circuit (1) is in the first operating mode, the second pressure reducer (8) of the first refrigerant circuit (1) being kept closed, and the second refrigerant circuit (101) is in the fourth operating mode.

17. Thermodynamic machine according to any one of claims 14 to 16, **characterized in that** the control circuit (600) is configured to define a configuration in which the first refrigerant circuit (1) is in the second operating mode, the third pressure reducer (9) of the first refrigerant circuit (1) being kept closed, and the second refrigerant circuit (101) is in the fourth operating mode.

18. Thermodynamic machine according to any one of claims 14 to 17, **characterized in that** the control circuit (600) is configured to define a configuration in which the first refrigerant circuit (1) is in the second operating mode, the second pressure reducer (8) of the first refrigerant circuit (1) being kept closed, and the second refrigerant circuit (101) is in the third operating mode.

19. Method for operation of a thermodynamic machine comprising the following steps:
- Providing a thermodynamic machine according to one of claims 1 to 12;
- Making the thermodynamic machine operate in an operating mode chosen from:
i) parallel connection of the second heat exchanger (3), of the third heat exchanger (4) and of the fourth heat exchanger (5), the second heat exchanger (3), the third heat exchanger (4) and the fourth heat exchanger (5) operating as refrigerant evaporators, between the outlet of the first heat exchanger (2) that operates as a refrigerant condenser and the inlet of the compressor (6),
ii) parallel connection of the first heat exchanger (2), of the third heat exchanger (4) and of the fourth heat exchanger (5), the first heat exchanger (2), the third heat exchanger (4) and the fourth heat exchanger (5) operating as refrigerant condensers, between the outlet of the compressor (6) and the inlet of the second heat exchanger (3) that operates as a refrigerant evaporator,
iii) series connection of the fourth heat exchanger (5) that operates as a refrigerant condenser, and of the third heat exchanger (4) that operates as a refrigerant evaporator, between the outlet of the compressor (6) and the inlet of the compressor (6),
iv) series connection of the third heat exchanger (4) that operates as a refrigerant condenser, and of the fourth heat exchanger (5) that operates as a refrigerant evaporator, between the outlet of the compressor (6) and the inlet of the compressor (6).

20. Method for operation of a thermodynamic machine comprising the following steps:
- Providing a thermodynamic machine according to one of claims 13 to 18;
- Making the thermodynamic machine operate in at least one of the operating modes chosen from:
i) the first heat exchanger (2) condenses the first refrigerant, the second heat exchanger (3) evaporates the first refrigerant, the third heat exchanger (4) evaporates the first refrigerant and the second refrigerant, the fourth heat exchanger (5) condenses the second refrigerant, the first refrigerant does not flow through the fourth heat exchanger (5), and the second refrigerant does not flow through the first and second heat exchangers (2) and (3),
ii) the first heat exchanger (2) condenses the first refrigerant, the second heat exchanger (3) evaporates the first refrigerant, the third heat exchanger (4) condenses the second refrigerant, the fourth heat exchanger (5) evaporates the first refrigerant and the second refrigerant, the first refrigerant does not flow through the third heat exchanger (4), and the second refrigerant does not flow through the first and second heat exchangers (2) and (3),
iii) the first heat exchanger (2) condenses the first refrigerant, the second heat exchanger (3) evaporates the first refrigerant, the third heat exchanger (4) condenses the first refrigerant and the second refrigerant, the fourth heat exchanger (5) evaporates the second refrigerant, the first refrigerant does not flow through the fourth heat exchanger (5), and the second refrigerant does not flow through the first and second heat exchangers (2) and (3),
iv) the first heat exchanger (2) condenses the first refrigerant, the second heat exchanger (3) evaporates the first refrigerant, the third heat exchanger (4) evaporates the second refrigerant, the fourth heat exchanger (5) condenses the first refrigerant and the second refrigerant, the first refrigerant does not flow through the third heat exchanger (4), and the second refrigerant does not flow through the first and second heat exchangers (2) and (3).
